# EUROPEAN PATENT APPLICATION

(11) **EP 4 349 171 A1**
(43) Date of publication of application: **10.04.2024**
(21) Application number: 22461615.1
(22) Date of filing: 08.10.2022
(51) Int. Cl.: A01N 59/16, A01N 59/08, A01N 59/04, A01P 3/00

(54) **A SOLID FORM FOR PREPARATION OF AN AQUEOUS DISPERSION, AQUEOUS DISPERSION, STABLE SUSPENSION CONCENTRATE, COMBINED AQUEOUS DISPERSION, AND USES THEREOF**

(71) Applicant: Insignes Labs Sp. z o.o., 30-074 Krakow (PL)
(72) Inventor: Ogar, Anna, 31-416 Kraków (PL); D ugosz, Maciej, 30-611 Kraków (PL); Siwak, Micha, 03-193 Warszawa (PL)
(74) Representative: Witek, Rafal

(57) **Abstract**

A solid form for preparation of an aqueous dispersion is provided. The solid form can include a first oxyzinc compound, silver carbonate, and a metal salt Also provided are an aqueous dispersion, a stable suspension concentrate, a combined aqueous dispersion, and uses thereof.

## Description

### Field

The present inventions generally relate to solid forms for preparation of aqueous dispersions, aqueous dispersions, combined aqueous dispersions, and uses thereof. The inventions are applicable in agriculture. More particularly, embodiments of the inventions relate to compositions and methods for combined action effect with biocidal active substances for improved plant physiology. Compositions of the present invention can be used for improving growth in crops. Thus, according to a further aspect of the present invention, there is provided a method which is applied to the seed (seed coating), the plant and/or to the fruit of the plant or soil, for the pre-harvest treatments and post-harvest protection.

### Background

Compositions of mixtures of silver compounds, zinc compounds and soluble carbonates as combined action with active substances inhibit pathogens growth, improve plant health and growth upon application thereby increasing yield quantity and quality. The present inventions supplement plants with a micronutrient that stimulates the vital processes of plants, ultimately leading to accelerated growth and development, increased efficiency of photosynthesis, and thus increased productivity.

Protective effect against microbes is associated with interactions between an active substance, silver, zinc and a carbonate. Silver and zinc ions are mild antimicrobials due to the oligodynamic effect. These metals react with thiol (-SH) or amine (-NH(1,2,3)) groups of proteins, deactivating the basic functions of a cell. To enhance this effect, carbonate ions are incorporated into the millbase composition (MFA - Multifunctional Additive). Antimicrobial activity of silver was proven to be enhanced by the use of carbonate ions, which are not classified as biocidal compounds, leading up to a 1000-fold increase in antibacterial activity (Swathy, J. R., et al. "Antimicrobial silver: an unprecedented anion effect." *Scientific reports* 4.1 (2014): 1-5). The carbonate ions enhance the activity of oligodynamic metals by disturbing the low molecular weight peripheral proteins of the microbe membrane. This renders the membrane more permeable and leads to a higher uptake of oligodynamic metal ions. These ions can further react with proteins containing a thiol or an amine, deactivating the basic functions of the cell. The enhancement of the antimicrobial effect was observed against gram-positive, as well as gram-negative bacteria. However, the carbonate enhancing effect was not previously tested with respect to the combination of silver with zinc for microbes such as fungi.

Said composition of a combined action effect mixed with antimicrobial active substances allows to significantly reduce the quantity of the active substance required to obtain a desirable positive antimicrobial effect. The antimicrobial enhancement is non-specific, as it is observed for active substances having different mechanism of action. For azoles, the observed efficacy is the highest due to two different mechanisms of antifungal/antimicrobial activity which are complementary to each other. Azoles are inhibitors of the enzyme lanosterol 14α-demethylase (CYP51A1), which is necessary for the production of ergosterol - an essential component of the fungal cell membrane - from lanosterol. The carbonate further weakens the cell membrane, which allows for penetration of silver, zinc and active substances, ultimately leading to a more significant enhancement than in the case of other groups of substances.

Moreover, the mixture can be used to condition soil pH, which is critical to plant growth. With the use of certain types of nitrogen fertilizer, acidification of croplands is observed. In such soil conditions, more than 80% of plant diseases are caused by fungi (Guo, J. H, et al. "Significant acidification in major Chinese croplands." Science 327.5968 (2010): 1008-1010). The solution can be an alkaline fertilizer (CN104761322A) or a soil conditioner and plant growth regulator containing sodium carbonate (CN105272714A). However, it is important to remember that a too large amount of carbonate ions hinders plant uptake of calcium and magnesium. On the other hand, potassium carbonate in an oligodynamic composition based on carbonate enhanced metals can be the source of potassium ions, one of macronutrients (Singh, B. & Schulze, D. G. "Soil Minerals and Plant Nutrition". Nature Education Knowledge (2015) 6(1):1). It has been shown that the zinc deficiency has a highly negative impact on the nitrogen assimilation process (Nitrogen Use Efficiency (NUE) parameter). Lack of this microelement makes it impossible to effectively combine the nitrogen into the amino acids which leads to lack of native proteins in plants cells. In fact, the nitrogen metabolism can be reduced even by 50%, thus the zinc fertilization is a recommended strategy to follow (Montoya, Mónica, et al. "Zinc-nitrogen co-fertilization influences N2O emissions and microbial communities in an irrigated maize field." Geoderma 383 (2021): 114735).

Zinc is an essential micronutrient required for various enzymatic and physiological processes at different stages of plant development (Sharma, Ashish, et al. "Zinc - an indispensable micronutrient." Physiology and Molecular Biology of Plants 19.1 (2013): 11-20). Elicitation with metal ions activates signalling pathways and leads to the production of bioactive metabolites (oligosaccharides, glycopeptides and glycoproteins, proteins, lipids) in plants. From a biochemical point of view, zinc is essential for proper metabolism of carbohydrates, fats, proteins, and energy metabolism. Several hundred enzymes containing this micronutrient have been identified in plants and are involved in the synthesis of nucleic acids, proteins, carbohydrates, and chlorophylls. Most zinc-containing enzymes are involved in transcription, RNA transformation, and translation processes; many transcription factors contain a zinc finger motif. Zinc-dependent peptidases, metalloproteases and carbonic anhydrase, among others, are also active in plant chloroplasts and mitochondria (Hänsch, Robert, and Ralf R. Mendel. "Physiological functions of mineral micronutrients (Cu, Zn, Mn, Fe, Ni, Mo, B, CI)." Current opinion in plant biology 12.3 (2009): 259-266). In zinc-containing enzymes, zinc can have three functions: catalytic, co-catalytic, and structural. A zinc atom can directly participate in enzyme catalysis or modify the catalytic function of another zinc atom in the same enzyme; structural zinc stabilizes protein structure (Vallee, Bert L., and Kenneth H. Falchuk. "The biochemical basis of zinc physiology." Physiological reviews 73.1 (1993): 79-118). The introduction of different doses of zinc into the soil or (in the case of maize) into the leaves resulted in a significant increase in the photosynthetic level of maize and several different varieties of wheat, which is a prerequisite for better plant resistance and yield (Bharti, K., et al. "Effect of Exogenous Zinc Supply on Photosynthetic Rate, Chlorophyll Content and Some Growth Parameters in Different Wheat Genotypes." Cereal Research Communications, vol. 42, no. 4 (2014): 589-600; Liu, Chunkui, et al. "Co-application of molybdenum and zinc increases grain yield and photosynthetic efficiency of wheat leaves." Plant, Soil and Environment 65.10 (2019): 508-515; Liu, Dun-Yi, et al. "Zinc uptake, translocation, and remobilization in winter wheat as affected by soil application of Zn fertilizer." Frontiers in Plant Science 10 (2019): 426). In recent years, zinc has also been shown to positively affect enzymes that protect cereal plants from abiotic stresses, such as drought stress. Such effects have been demonstrated both at the expression level of genes encoding enzymes of the ascorbate-glutathione cycle and the flavonoid biosynthesis pathway, and at the activities of key antioxidant enzymes: superoxide dismutase, catalase, and peroxidase (Ma, Dongyun, et al. "Physiological responses and yield of wheat plants in zinc-mediated alleviation of drought stress." Frontiers in plant science 8 (2017): 860; Liu, Chunkui, et al. "Co-application of molybdenum and zinc increases grain yield and photosynthetic efficiency of wheat leaves." Plant, Soil and Environment 65.10 (2019): 508-515). Zn deficiency is a common phenomenon on arid, dry soils. It is estimated that about 50% of the land used by global agriculture for cereal production is zinc deficient (Alloway, Brian J. "Soil factors associated with zinc deficiency in crops and humans." Environmental geochemistry and health 31.5 (2009): 537-548). This problem is particularly relevant to agriculture in southern Asia, but is also found in Europe, for example, in Lithuania (Sharma, Ashish, et al. "Zinc - an indispensable micronutrient." Physiology and Molecular Biology of Plants 19.1 (2013): 11-20; Juknevičius, Stasys, and Nomeda Sabiene. "The content of mineral elements in some grasses and legumes." Ekologija 53.1 (2007): 44-52). The efficacy of different ways of supplementing this deficiency in cereal production is debated: soil fertilization, foliar fertilization and seed treatment (Cakmak, Ismail. "Enrichment of cereal grains with zinc: agronomic or genetic biofortification?" Plant and soil 302.1 (2008): 1-17). The multifunctional additive (MFA) technology in addition to supporting fungicides, can therefore play a valuable role in counteracting Zn deficiency in soil.

In the publication "Effects of Chloride Fertilizer and Systemic Fungicide Seed Treatments on Common Root Rot of Barley" (Shefelbine, P. A., D. E. Mathre, and G. Carlson. Plant disease 70.7 (1986): 639-642) two chloride fertilizers and six systemic fungicides, which inhibit ergosterol biosynthesis, were tested for efficacy in controlling *Cochliobolus sativus* of spring barley in Montana in 1981 and 1982. Nuarimol and imazalil seed treatments increased emergence compared with that observed in uninoculated plots, whereas chloride fertilizers had no effect on plant emergence. Common root rot (CRR) was controlled only with fertilizers containing chloride, indicating that the chloride anion was the probable effective agent. Although most of the fungicides reduced disease ratings, only nuarimol was statistically significant in disease reduction. Significant disease control effected by chloride or nuarimol use did not increase grain yield. Overall, the results suggest that healthy plants in a diseased plant population may compensate for stand reduction by an increase in other yield components. These results would render apparent disease control economically unfeasible under conditions of mild or moderate CRR disease.

In the Canadian patent application CA2554236A1 synergistic antifungal compositions comprising didecyl ammonium chloride (DDAC) and a post-harvest antifungal agent selected from the group consisting of imazalil, boscalid, fenhexamid, pyrimethanil, thiophanate-methyl, triflumizole, azoxystrobin, dimoxystrobin, picoxystrobin, and pyraclostrobin for protecting plants, fruit or seeds against phytopathogenic fungi were described.

The embodiments of the present inventions provide, *inter alia*, mixtures of stable dispersions with active ingredients which can be used to reduce total amount of active substances applied (for example, as combined action effect mixtures), in order to reduce the application rates. The multilevel effect of the present inventions is related to the induction of natural metabolic pathways of crops, which translates into improved development, growth and increase of the productivity of many diverse species of annual and perennial crops. A further aspect with respect to improved efficiency of such compositions comprises minimization of the doses of chemical products spread in the environment and reduction of the costs of the treatment. The embodiments of the present invention have unexpectedly solved the above-mentioned problems.

The first subject of the invention is solid form for preparation of an aqueous dispersion, characterised in that it comprises (a) a first oxyzinc compound selected from a group comprising: zinc oxide or a first zinc salt of oxygen acid; (b) silver carbonate; and (c) a metal salt selected from a group comprising: an alkali metal carbonate, a second oxyzinc compound or a zinc salt of a halogen hydracid.

In the preferred embodiment weight ratio of the first oxyzinc compound:silver carbonate:metal salt is from 19.5% to 80%:0.5% to 4%:16% to 80.0%, preferably weight ratio of first oxyzinc compound:silver carbonate:metal salt is from 20% to 80%:0.5% to 4%:16% to 80.0%.

In the preferred embodiment first zinc salt of oxygen compound is selected from a group comprising: basic zinc carbonate or zinc metasilicate; and the alkali metal carbonate is sodium carbonate, the second oxyzinc compound is a second zinc salt of oxygen acid, preferably zinc sulphate heptahydrate, and the zinc salt of halogen hydracid is zinc halide.

In another preferred embodiment the form comprises zinc oxide, zinc halide and silver carbonate, wherein the form comprises zinc oxide:silver carbonate:zinc halide in weight ratio from 20% to 80%:0.5% to 4%:16% to 40%. In the further preferred embodiment, the form is a powder or granules.

Second subject of the invention is an aqueous dispersion, characterised in that it comprises the form, as defined in the first subject of the invention, in an amount of 10% (w/w) to 45% (w/w) of the aqueous dispersion, preferably from 15% (w/w) to 40% (w/w). In the preferred embodiment it comprises additional one or more adjuvants selected from a group consisting of comprising: surfactants, protective colloids, adhesives, thickeners, thixotropic agents, penetration agents, stabilisers and/or sequestering agents.

Third subject of the invention is a stable suspension concentrate, characterised in that it comprises the solid form as defined according to any of claims 1 to 6 in an amount of 10% (w/w) to 45% (w/w) of the concentrate in combination with one or more active substances in an amount from 10% to 45% by weight of the concentrate, wherein the active substance is fungicide. Preferably the concentrate comprises additional one or more adjuvants selected from a group comprising: surfactants, protective colloids, adhesives, thickeners, thixotropic agents, penetration agents, stabilisers and/or sequestering agents, wherein one or more fungicides are selected from a group comprising: quinone outside inhibitor, preferably strobilurin fungicide, more preferably methoxyacrylate fungicide or methoxycarbamates fungicide (azoxystrobin, pyraclostrobin), phenylpyrrole fungicide (fludioxonil), demethylation inhibitor fungicide, preferably triazolinthione fungicide (prothioconazole), fluopyram, bixafen, benzamide fungicide, preferably pyridinylmethyl benzamide (fluopicolide), succinate dehydrogenase inhibitor fungicide, preferably pyridine carboxamide fungicide or pyridinylethyl benzamide fungicide or pyrazole-4-carboxamide fungicide (boscalid, fluopyram, bixafen), or methyl benzimidazole carbamate, preferably thiabendazole, quinone inside inhibitor, preferably cyanoimidazole, more preferably cyazofamid, oxidative phosphorylation uncoupling, preferably 2,6-dinitroanilines, more preferably fluazinam, multi-site contact inhibitor, preferably phthalimide fungicide, more preferably captan, guanidine fungicide or aryl-phenyl ketone fungicide, preferably dodine or metrafenone, or combination thereof.

Preferably the concentrate comprises the solid in a form of a suspension in an amount from 10% to 30% by weight of the concentrate, or in a form of a wettable powder in an amount from 10% to 45% by weight of the concentrate.

Fourth subject of the invention is a combined aqueous dispersion, characterised in that it comprises the aqueous dispersion as defined in the second object of the invention in combination with one or more active substances, wherein a weight ratio of the aqueous dispersion to the at one least active substance or combination of at least two active substances is from 1:0.85 to 6:7, wherein active substance is fungicide. In the preferred embodiment the one or more fungicides are selected from a group comprising of: quinone outside inhibitor, preferably strobilurin fungicide, more preferably methoxyacrylate fungicide or methoxycarbamates fungicide (azoxystrobin, pyraclostrobin), phenylpyrrole fungicide (fludioxonil), demethylation inhibitor fungicide, preferably triazolinthione fungicide (prothioconazole), fluopyram, bixafen, benzamide fungicide, preferably pyridinylmethyl benzamide (fluopicolide), succinate dehydrogenase inhibitor fungicide, preferably pyridine carboxamide fungicide or pyridinylethyl benzamide fungicide or pyrazole-4-carboxamide fungicide (boscalid, fluopyram, bixafen), or methyl benzimidazole carbamate, preferably thiabendazole, quinone inside inhibitor, preferably cyanoimidazole, more preferably cyazofamid, oxidative phosphorylation uncoupling, preferably 2,6-dinitroanilines, more preferably fluazinam, multi-site contact inhibitor, preferably phthalimide fungicide, more preferably captan, guanidine fungicide or aryl-phenyl ketone fungicide, preferably dodine or metrafenone, or a combination thereof.

Fifth subject of the invention is a use of the aqueous dispersion as defined in the second subject of the invention, for preparation of combined spraying formulation, wherein the combined spraying formulation comprises the aqueous dispersion in an amount from 50% (w/w) to 100% (w/w), optionally combined with an active substance in an amount less than 50% (w/w) selected from a group comprising fungicide or bactericide or commercially available crop protection product comprising fungicides, wherein preferably fungicide is selected from a group comprising: quinone outside inhibitor, preferably strobilurin fungicide, more preferably methoxyacrylate fungicide, preferably azoxystrobin, demethylation inhibitor fungicide, preferably triazole fungicide or imidazole fungicide, preferably metconazole or prochloraz, or a combination thereof, optionally the combined spraying formulation comprises humic substances in an amount 50% (w/w) or zinc-EDTA complex in an amount of 30% (w/w).

Sixth subject of the invention is use of combined spraying formulation, as defined in the fourth subject of the invention, for controlling or treating pathogens of wheat, barley, rape oilseed, potatoes, sugar beet, strawberries, raspberries, apples, soya, or grapes.

Seventh subject of the invention is use of the aqueous dispersion, as defined in the second subject of the invention, for seed treatment, optionally in combination with active substance selected from group comprising: fungicide or bactericide, wherein the weight ratio of the aqueous dispersion to the active substance is from 1:2 to 1:4.

The mixtures can contain a combination of compounds with multifunctional action, as well as facilitating the retention of spray drops on the surface of the sprayed plants, creating a favourable environment for the activity of fungicides with various mode of action. Elicitation with metal ions provides non-specific resistance to many biotic and abiotic factors and activates signalling pathways leading to the production of bioactive metabolites in plants. That plays a vital role in a number of physiological responses, including plant defence. All this is reflected in an overall improvement of plant development and increased resistance, to limit development of pathogens on the plant surface, and by penetrating the plant. The sum of these actions can result in better plant health and growth while weakening the development of pathogens, which enables effective protection with the use of reduced doses of fungicides and bactericides.

### Summary

In accordance with one aspect of the inventions, a solid form for preparation of an aqueous dispersion is provided. The solid form can comprise: (a) a first oxyzinc compound selected from a group comprsing: zinc oxide and a first zinc salt of oxygen acid; (b) silver carbonate; and (c) a metal salt selected from a group comprsing: an alkali metal carbonate, a second oxyzinc compound or a zinc salt of a halogen hydracid. In accorordance to one embodiment, a weight ratio of the first oxyzinc compound:silver carbonate:metal salt is from 19.5% to 80%:0.5% to 4%:16% to 80.0%, preferably weight ratio of first oxyzinc compound:silver carbonate:metal salt is from 20% to 80%:0.5% to 4%:16% to 80.0%. In accordance wiht one emodiment, the first zinc salt of oxygen acid is selected from a group comprising: basic zinc carbonate and zinc metasilicate; and the alkali metal carbonate is sodium carbonate; the second oxyzinc compound is a second zinc salt of oxygen acid, preferably zinc sulphate heptahydrate; and the zinc salt of halogen hydracid is zinc halide. In one embodiment, the solid form comprises zinc oxide, zinc halide and silver carbonate, wherein the form comprises zinc oxide:silver carbonate:zinc halide in weight ratio from 20% to 80%:0.5% to 4%:16% to 40%. The solid form can have a form of a powder or granules.

In accordance with another aspect of the inventions, an aqueous dispersion is provided. The dispersion can comprise the solid form according to any of the embodiments of the present inventions in an amount of 10% (w/w) to 45% (w/w) of the total amount of the aqueous dispersion, preferably from 15% (w/w) to 40% (w/w). In one embodiment, the aqueous dispersion can additionally comprise one or more adjuvants selected from a group consisting of a surfactant, a protective colloid, an adhesive, a thickener, a thixotropic agent, a penetration agent, a stabiliser and/or a sequestering agent.

In accordance with another aspect of the inventions stable suspension concentrate is provided. The concentrate can comprise the solid form in an amount of 10% (w/w) to 45% (w/w) of the total amount of the concentrate in combination with one or more active substances in an amount from 10% to 45% by weight of the total amount of the concentrate, wherein the active substance is one or more fungicide. The concentrate can additionally comprise one or more adjuvants selected from a group consisting of a surfactant, a protective colloid, an adhesive, a thickener, a thixotropic agent, a penetration agent, a stabiliser and/or a sequestering agent. In one embodiment, the one or more fungicides are selected from a group consisting of quinone outside inhibitor, preferably strobilurin fungicide, more preferably methoxyacrylate fungicide or methoxycarbamates fungicide (azoxystrobin, pyraclostrobin), phenylpyrrole fungicide (fludioxonil), demethylation inhibitor fungicide, preferably triazolinthione fungicide (prothioconazole), fluopyram, bixafen, benzamide fungicide, preferably pyridinylmethyl benzamide (fluopicolide), succinate dehydrogenase inhibitor fungicide, preferably pyridine carboxamide fungicide or pyridinylethyl benzamide fungicide or pyrazole-4-carboxamide fungicide (boscalid, fluopyram, bixafen) or methyl benzimidazole carbamate, preferably thiabendazole, quinone inside inhibitor, preferably cyanoimidazole, more preferably cyazofamid, oxidative phosphorylation uncoupling, preferably 2,6-dinitroanilines, more preferably fluazinam, multi-site contact inhibitor, preferably phthalimide fungicide, more preferably captan, guanidine fungicide or aryl-phenyl ketone fungicide, preferably dodine or metrafenone, or a combination thereof. In one embodiment the concentrate can comprise the solid in a form of a suspension in an amount from 10% to 30% by weight of the concentrate, or in a form of a wettable powder in an amount from 10% to 45% by weight of the concentrate.

In accordance with another embodiment, a combined aqueous dispersion is provided, comprising the aqueous dispersion as defined above in combination with one or more active substances, wherein a weight ratio of the aqueous dispersion to the at one least active substance or combination of at least two active substances is from 1:0.85 to 6:7, wherein the active substance is one or more fungicide. In one embodiment, the one or more fungicides are selected from a group comprising: quinone outside inhibitor, preferably strobilurin fungicide, more preferably methoxyacrylate fungicide or methoxycarbamates fungicide (azoxystrobin, pyraclostrobin), phenylpyrrole fungicide (fludioxonil), demethylation inhibitor fungicide, preferably triazolinthione fungicide (prothioconazole), fluopyram, bixafen, benzamide fungicide, preferably pyridinylmethyl benzamide (fluopicolide), succinate dehydrogenase inhibitor fungicide, preferably pyridine carboxamide fungicide or pyridinylethyl benzamide fungicide or pyrazole-4-carboxamide fungicide (boscalid, fluopyram, bixafen) or methyl benzimidazole carbamate, preferably thiabendazole, quinone inside inhibitor, preferably cyanoimidazole, more preferably cyazofamid, oxidative phosphorylation uncoupling, preferably 2,6-dinitroanilines, more preferably fluazinam, multi-site contact inhibitor, preferably phthalimide fungicide, more preferably captan, guanidine fungicide or aryl-phenyl ketone fungicide, preferably dodine or metrafenone, or a combination thereof.

In accordance with one aspect of the present inventions, a use of the dispersion as defined above for preparation of a combined spraying formulation is provided. The combined spraying formulation can comprise the aqueous dispersion in an amount from 50% (w/w) to 100% (w/w), optionally combined with an active substance in an amount less than 50% (w/w) selected from a group comprising fungicide or bactericide or commercial crop protection product comprising fungicides, wherein preferably fungicide is selected from a group comprising: quinone outside inhibitor, preferably strobilurin fungicide, more preferably methoxyacrylate fungicide, preferably azoxystrobin, demethylation inhibitor fungicide, preferably triazole fungicide or imidazole fungicide, preferably metconazole or prochloraz, or a combination thereof, optionally the combined spraying formulation comprises humic substances (biostimulants and fertilizers) in an amount of 50% (w/w) or zinc-EDTA complex in an amount of 30% (w/w).

In accordance with one aspect of the present inventions, a use of combined spraying formulation, as defined above, for improving plant physiology and controlling or treating pathogens of wheat, barley, oilseed rape, potatoes, sugar beet, strawberries, raspberries, apples, soya, hemp or grapes applied on the seed (seed coating), foliar sprays pre-harvest treatments and post-harvest protection against storage diseases is provided.

In accordance with one apsect of the present inventions, a use of the aqueous dispersion as defined defined above for seed treatment, optionally in combination with an active substance selected from a group consisting of fungicide or bactericide is provided. The weight ratio of the aqueous dispersion to the active substance can be from 1:2 to 1:4.

### Description

A more particular aspect relates to said antimicrobial including fungicidal composition wherein component (c) comprises at least one additional compound that is a fungicide (i.e., an additional fungicidal compound). In one embodiment of the present compositions, additional fungicidal compounds in component (c) can be selected from the following group or a group consisting of: (c1) methyl benzimidazole carbamate (MBC) fungicides; (c2) demethylation inhibitor (DMI) fungicides; (c3) amine/morpholine fungicides; (c4) succinate dehydrogenase inhibitors (SDHI) fungicides; (c5) anilinopyrimidine fungicides; (c6) quinone outside inhibitor (Qol) fungicides; (c7) phenylpyrrole fungicides; (c8) Sterol Biosynthesis Inhibitor (SBI): class III fungicides; (c9) quinone inside inhibitor (Qil) fungicides; (c10) cyanoacetamideoxime fungicides; (c11) carbamate fungicides (FRAC code 28); (c12) oxidative phosphorylation uncoupling fungicides; (c13) carboxylic acid amide (CAA) fungicides; (c14) benzamide fungicides; (c15) "Oxysterol binding protein homologue inhibition"; (c16) multi-site contact fungicides; and/or (c17) fungicides whose mode of action may be unknown.

Of note are fungicide composition embodiments wherein component (c) comprises at least one fungicidal compound from each of two different groups selected from (c1) through (c17).

"Methyl benzimidazole carbamate (MBC) fungicides (c1)" (FRAC (Fungicide Resistance Action Committee) code 1) inhibit mitosis by binding to b-tubulin during microtubule assembly. Inhibition of microtubule assembly can disrupt cell division, transport within the cell and cell structure. Methyl benzimidazole carbamate fungicides include benzimidazole and thiophanate fungicides. The benzimidazoles include benomyl, carbendazim, fuberidazole and thiabendazole. The thiophanates include thiophanate and thiophanate-methyl.

"Demethylation inhibitor (DMI) fungicides (c2)" (FRAC code 3) (Sterol Biosynthesis Inhibitors (SBI): Class I) inhibit C14-demethylase which plays a role in sterol production. Sterols, such as ergosterol, are needed for membrane structure and function, making them essential for the development of functional cell walls. Therefore, exposure to these fungicides result in abnormal growth and eventually death of sensitive fungi. DMI fungicides are divided between several chemical classes: azoles (including triazoles and imidazoles), pyrimidines, piperazines, pyridines and triazolinthiones. The triazoles include azaconazole, bitertanol, bromuconazole, cyproconazole, difenoconazole, diniconazole, epoxiconazole, etaconazole, fenbuconazole, fluquinconazole, flusilazole, flutriafol, hexaconazole, imibenconazole, ipconazole, mefentrifluconazole, metconazole, myclobutanil, penconazole, propiconazole, simeconazole, tebuconazole, tetraconazole, triadimefon, triadimenol, and triticonazole. The imidazoles include clotrimazole, econazole, imazalil, isoconazole, oxpoconazole, prochloraz, pefurazoate and triflumizole. The pyrimidines include fenarimol and nuarimol. The piperazines include triforine. The pyridines include pyrifenox and pyrisoxazole. The triazolinthiones include prothioconazole. Biochemical investigations have shown that all of the above-mentioned fungicides are DMI fungicides as described by K. H. Kuck et al. in Modern Selective Fungicides - Properties, Applications and Mechanisms of Action, H. Lyr (Ed.), Gustav Fischer Verlag: New York, 1995, 205-258.

"Amine/morpholine fungicides (c3)" (FRAC code 5) (SBI: Class II) inhibit two target sites within the sterol biosynthetic pathway, D8 D7 isomerase and D14 reductase. Sterols, such as ergosterol, are needed for membrane structure and function, making them essential for the development of functional cell walls. Therefore, exposure to these fungicides results in abnormal growth and eventually death of sensitive fungi. Amine/morpholine fungicides (also known as non-DMI sterol biosynthesis inhibitors) include morpholine, piperidine and spiroketal-amine fungicides. The morpholines include aldimorph, dodemorph, fenpropimorph, tridemorph. The piperidines include fenpropidin and piperalin. The spiroketal-amines include spiroxamine.

"Succinate dehydrogenase inhibitor (SDHI) fungicides (c4)", (FRAC code 7) inhibit Complex II fungal respiration by disrupting a key enzyme in the Krebs Cycle (TCA cycle) named succinate dehydrogenase. Inhibiting respiration prevents the fungus from making ATP, and thus inhibits growth and reproduction. Carboxamide fungicides include phenylbenzamide, furan carboxamide, oxathiin carboxamide, thiazole carboxamide, pyrazole-4-carboxamide and pyridine carboxamide, phenyl oxoethyl thiophene amides and pyridinylethyl benzamides, phenyl cyclobutyl pyridineamide, N-cyclopropyl-N-benzylpyrazole-carboxamides, and pyrazine-carboxamides. The phenylbenzamides include benodanil, flutolanil and mepronil. The furan carboxamides include fenfuram. The oxathiin carboxamides include carboxin and oxycarboxin. The thiazole carboxamides include thifluzamide. The pyrazole-4-carboxamides include benzovindiflupyr, bixafen, fluindapyr, fluxapyroxad, furametpyr, inpyrfluxam, isopyrazam, penflufen, penthiopyrad, and sedaxane. The pyridine carboxamides include boscalid. The phenyl oxoethyl thiophene amides include isofetamid. The pyridinylethyl benzamides include fluopyram. The phenyl-cyclobutyl pyridineamide include cyclobutrifluram. The pyrazine-carboxamides include pyraziflumid.

"Anilinopyrimidine fungicides (c5)" (FRAC code 9) are proposed to inhibit biosynthesis of the amino acid methionine and to disrupt the secretion of hydrolytic enzymes that lyse plant cells during infection. Examples include cyprodinil, mepanipyrim and pyrimethanil.

"Quinone outside inhibitor (Qol) fungicides (c6)" (FRAC code 11) inhibit Complex III mitochondrial respiration in fungi by affecting ubiquinol oxidase. Oxidation of ubiquinol is blocked at the "quinone outside" (Q0) site of the cytochrome bc₁ complex, which is located in the inner mitochondrial membrane of fungi. Inhibiting mitochondrial respiration prevents normal fungal growth and development. Quinone outside inhibitor fungicides include methoxyacrylate, methoxyacetamide, methoxycarbamate, oximinoacetate, oximinoacetamide and dihydrodioxazine fungicides (collectively also known as strobilurin fungicides), and oxazolidinedione, imidazolinone and benzylcarbamate fungicides. The methoxyacrylates include azoxystrobin, coumoxystrobin, enoxastrobin, flufenoxystrobin, picoxystrobin and pyraoxystrobin. The methoxycarbamates include pyraclostrobin, pyrametostrobin, and triclopyricarb. The oximinoacetates include kresoxim-methyl and trifloxystrobin. The oximinoacetamides include dimoxystrobin, fenaminstrobin, metominostrobin, orysastrobin. The dihydrodioxazines include fluoxastrobin. The oxazolidinediones include famoxadone. The imidazolinones include fenamidone. The benzylcarbamates include pyribencarb. The methoxyacetamide also includes mandestrobin.

"Phenylpyrrole fungicides (c7)" (FRAC code 12) inhibit a MAP histidine kinase associated with osmotic signal transduction in fungi. Fenpiclonil and fludioxonil are examples of this fungicide class.

"Sterol Biosynthesis Inhibitor (SBI): Class III fungicides (c8)", (FRAC code 17) inhibit 3-ketoreductase during C4-demethylation in sterol production. SBI: Class III inhibitors include hydroxyanilide fungicides and aminopyrazolinone fungicides. Hydroxyanilides include fenhexamid. Aminopyrazolinones include fenpyrazamine.

"Quinone inside inhibitor (Qil) fungicides (c9)" (FRAC code 21) inhibit Complex III mitochondrial respiration in fungi by affecting ubiquinone reductase. Reduction of ubiquinol is blocked at the "quinone inside" (Qi) site of the cytochrome bc₁ complex, which is located in the inner mitochondrial membrane of fungi. Inhibiting mitochondrial respiration prevents normal fungal growth and development. Quinone inside inhibitor fungicides include cyanoimidazole, sulfamoyltriazole and picolinamide fungicides. The cyanoimidazoles include cyazofamid. The sulfamoyltriazoles include amisulbrom. The picolinamides include fenpicoxamid and florylpicoxamid.

"Cyanoacetamideoxime fungicides (c10)" (FRAC code 27) include cymoxanil.

"Carbamate fungicides (c11)" (FRAC code 28) are considered multi-site inhibitors of fungal growth. They are proposed to interfere with the synthesis of fatty acids in cell membranes, which then disrupts cell membrane permeability. Propamacarb, propamacarb hydrochloride, iodocarb, and prothiocarb are examples of this fungicide class.

"Oxidative phosphorylation uncoupling fungicides (c12)" (FRAC code 29) inhibit fungal respiration by uncoupling oxidative phosphorylation. Inhibiting respiration prevents normal fungal growth and development. This class includes 2,6-dinitroanilines such as fluazinam and dinitrophenyl crotonates such as dinocap, meptyldinocap and binapacryl.

"Carboxylic acid amide (CAA) fungicides (c13)" (FRAC code 40) inhibit cellulose synthase, which prevents growth and leads to death of the target fungus. Carboxylic acid amide fungicides include cinnamic acid amide, valinamide carbamate and mandelic acid amide fungicides.

The cinnamic acid amides include dimethomorph, flumorph and pyrimorph. The valinamide carbamates include benthiavalicarb, iprovalicarb, valifenalate (also known as valiphenal). The mandelic acid amides include mandipropamid.

"Benzamide fungicides (c14)" (FRAC code 43) inhibit growth of fungi by derealization of spectrin-like proteins. Examples include pyridinylmethyl benzamide fungicides such as fluopicolide and fluopimomide.

"Oxysterol binding protein homologue inhibition (c15)" (FRAC code 49) include oxathiapiprolin and fluoxapiprolin.

"Multi-site contact fungicides (c16)" inhibit fungal growth through multiple sites of action and have contact/preventive activity. This class of fungicides includes: "copper fungicides (FRAC code M1)", "sulfur fungicides (FRAC code M2)", "dithiocarbamate fungicides (FRAC code M3)", "phthalimide fungicides (FRAC code M4)", "chloronitrile fungicides (FRAC code M5)", "sulfamide fungicides (FRAC code M6)", "multi-site contact guanidine fungicides (FRAC code M7)" "triazine fungicides (FRAC code M8)", "quinone fungicides (FRAC code M9), "quinoxaline fungicides" (FRAC code M10) and "maleimide fungicides" (FRAC code M11). "Copper fungicides" are inorganic compounds containing copper, typically in the copper(II) oxidation state; examples include copper oxychloride, copper sulfate and copper hydroxide, including compositions such as Bordeaux mixture (tribasic copper sulfate). "Sulfur fungicides" are inorganic chemicals containing rings or chains of sulfur atoms; examples include elemental sulfur. "Dithiocarbamate fungicides" contain a dithiocarbamate molecular moiety; examples include mancozeb, metiram, propineb, ferbam, maneb, thiram, zineb and ziram. "Phthalimide fungicides" contain a phthalimide molecular moiety; examples include folpet, captan and captafol. "Chloronitrile fungicides" contain an aromatic ring substituted with chloro and cyano; examples include chlorothalonil. "Sulfamide fungicides" include dichlofluanid and tolylfluanid. "Multi-site contact guanidine fungicides" include guazatine, iminoctadine albesilate and iminoctadine triacetate. "Triazine fungicides" include anilazine. "Quinone fungicides" include dithianon.

"Fungicides other than fungicides of components (c1) through (c16)" include certain fungicides whose mode of action may be unknown (c17). These include: "guanidine fungicides" (FRAC code U12), aryl-phenyl ketones (FRAC code 50). The guanidines include dodine. The aryl-phenyl ketones include benzophenones such as metrafenone and benzoylpyridine such as pyriofenone.

The multifunctional additive (MFA) can further be mixed/combined together with one or more fungicides, insecticide, herbicide, fertilizer (organic nonorganic) within tank mix. Tank mix is the combination by the user of two or more plant protection products (PPP) (or PPPs with an adjuvant/fertilizers/biostimulants) in the same spray tank.

In accordance with one aspect of various embodiments of the present invention it can provide a stable dispersion containing various compounds of zinc and silver as well as carbonate ions/zinc halide which create a favourable environment for the activity of fungicides with various mode of action. Together with parallel processes (stimulation of plant defence mechanisms and creating conditions unfavourable for the development of pathogens) this enables good operation of reduced doses of active substances.

As defined herein, the term "enhancer composition" refers to a mixture of a silver compound, a zinc compound and a soluble carbonate.

As defined herein, the term "soluble carbonates" refers to lithium carbonate, sodium carbonate and potassium carbonate or a mixture thereof. The application of soluble carbonates is crucial for the antimicrobial efficacy, since insoluble carbonates alone have too low carbonate ion release profiles to obtain a desirable enhancement of oligodynamic effect. The typical amount of soluble carbonates in enhancer compositions and enhancer fillers ranges from 19.50 wt% to 76.00 wt%.

As defined herein, the term "silver compound" refers to insoluble/weakly soluble silver salts, silver oxides, such as, but not limited to Ag₂CO₃, Ag₂SO₄, AgNO₃, Ag₃PO₄, or a mixture thereof. The amount of a silver compound in enhancer compositions and enhancer fillers can range from 0.50 wt% to 4.00 wt%. The size of a silver compound particle can range between 50 nm and 500 nm.

As defined herein, the term "zinc compound" refers to insoluble/weakly soluble zinc salts and oxides, such as, but not limited to: ZnO, ZnCO₃, [ZnCO₃]₂·[Zn(OH)₂]₃, Zn₃(PO₄)₂, ZnSiO₃, ZnSO₄, Zn(NO₃)₂, ZnBr₂, ZnCl₂ or a mixture thereof. The amount of a zinc compound in enhancer compositions and enhancer fillers can range from 16.00 wt% to 80.00 wt%. The size of a zinc compound particle can range between 50 nm and 500 nm.

As defined herein, the term co-formulants refers to surfactants, oils, compatibility agents, buffering and conditioning agents, defoaming agents, deposition agents, drift control agents, and thickeners necessary to form a stable dispersion, that meets the Collaborative International Pesticides Analytical Council (CIPAC) handbook guidelines.

The multifunctional additive and the fungicidal compositions selected from (c1) through (c17) of the present inventions may further comprise at least one other additional component such as auxiliaries, solvents, carriers or supports, filler, surfactants or extenders, all being agriculturally acceptable. According to a preferred embodiment, the active substance combinations and the fungicidal compositions can further comprise auxiliaries, solvents, carriers, surfactants and/or extenders.

The solid and liquid compositions of the present inventions often include one or more surfactants. When added to a liquid, surfactants (also known as "surface-active agents") generally modify, most often reduce, the surface tension of the liquid. Depending on the nature of the hydrophilic and lipophilic groups in a surfactant molecule, surfactants can be useful as wetting agents, dispersants, emulsifiers or defoaming agents. Surfactants can be classified as non-ionic, anionic or cationic. Non-ionic surfactants useful for the present compositions include, but are not limited to: modified polycarboxylate sodium salt, acrylic PEG copolymer, alcohol alkoxylates such as alcohol alkoxylates based on natural and synthetic alcohols (which may be branched or linear) and prepared from the alcohols and ethylene oxide, propylene oxide, butylene oxide or mixtures thereof; amine ethoxylates, alkanolamides and ethoxylated alkanolamides; alkoxylated triglycerides such as ethoxylated soybean, castor and rapeseed oils; alkylphenol alkoxylates such as octylphenol ethoxylates, nonylphenol ethoxylates, dinonyl phenol ethoxylates and dodecyl phenol ethoxylates (prepared from the phenols and ethylene oxide, propylene oxide, butylene oxide or mixtures thereof); block polymers prepared from ethylene oxide or propylene oxide and reverse block polymers where the terminal blocks are prepared from propylene oxide; ethoxylated fatty acids; ethoxylated fatty esters and oils; ethoxylated methyl esters; ethoxylated tristyrylphenol (including those prepared from ethylene oxide, propylene oxide, butylene oxide or mixtures thereof); fatty acid esters, glycerol esters, lanolin-based derivatives, polyethoxylate esters such as polyethoxylated sorbitan fatty acid esters, polyethoxylated sorbitol fatty acid esters and polyethoxylated glycerol fatty acid esters; other sorbitan derivatives such as sorbitan esters; polymeric surfactants such as random copolymers, block copolymers, alkyd peg (polyethylene glycol) resins, graft or comb polymers and star polymers; polyethylene glycols (pegs); polyethylene glycol fatty acid esters; silicone-based surfactants; and sugar-derivatives such as sucrose esters, alkyl polyglycosides and alkyl polysaccharides. Useful anionic surfactants include, but are not limited to: alkylaryl sulfonic acids and their salts; carboxylated alcohol or alkylphenol ethoxylates; diphenyl sulfonate derivatives; lignin and lignin derivatives such as lignosulfonates; maleic or succinic acids or their anhydrides; olefin sulfonates; phosphate esters such as phosphate esters of alcohol alkoxylates, phosphate esters of alkylphenol alkoxylates and phosphate esters of styryl phenol ethoxylates; protein-based surfactants; sarcosine derivatives; styryl phenol ether sulfate; sulfates and sulfonates of oils and fatty acids; sulfates and sulfonates of ethoxylated alkylphenols; sulfates of alcohols; sulfates of ethoxylated alcohols; sulfonates of amines and amides such as *N,N*-alkyltaurates; sulfonates of benzene, cumene, toluene, xylene, and dodecyl and tridecylbenzenes; sulfonates of condensed naphthalenes; sulfonates of naphthalene and alkyl naphthalene; sulfonates of fractionated petroleum; sulfosuccinamates; and sulfosuccinates and their derivatives such as dialkyl sulfosuccinate salts. Useful cationic surfactants include, but are not limited to: amides and ethoxylated amides; amines such as *N*-alkyl propanediamines, tripropylenetriamines and dipropylenetetramines, and ethoxylated amines, ethoxylated diamines and propoxylated amines (prepared from the amines and ethylene oxide, propylene oxide, butylene oxide or mixtures thereof); amine salts such as amine acetates and diamine salts; quaternary ammonium salts such as quaternary salts, ethoxylated quaternary salts and diquaternary salts; and amine oxides such as alkyldimethylamine oxides and bis-(2-hydroxyethyl)-alkylamine oxides. Also useful for the present compositions are mixtures of nonionic and anionic surfactants or mixtures of nonionic and cationic surfactants. The presence of at least one surfactant is generally essential when the active substances and/or the inert support are water-insoluble and when the vector agent for the application is water. Preferably, surfactant content may be comprised between 2% and 20% by weight of the composition.

Compositions of embodiments of the inventions may also contain formulation auxiliaries and additives, known to those skilled in the art as formulation aids (some of which may be considered to also function as solid diluents, liquid diluents or surfactants). Such formulation auxiliaries and additives may control: pH (buffers), foaming during processing (antifoams such polyorganosiloxanes), sedimentation of active substances (suspending agents), viscosity (thixotropic thickeners), in-container microbial growth (antimicrobials), product freezing (antifreezes), colour (dyes/pigment dispersions), wash-off (film formers or stickers), evaporation (evaporation retardants), and other formulation attributes. Film formers include, for example, polyvinyl acetates, polyvinyl acetate copolymers, polyvinylpyrrolidone-vinyl acetate copolymer, polyvinyl alcohols, polyvinyl alcohol copolymers and waxes.

Compositions according to embodiments the present inventions can be used in various forms such as aerosol dispenser, capsule suspension, cold fogging concentrate, dustable powder, emulsifiable concentrate, emulsion oil in water, emulsion water in oil, encapsulated granule, fine granule, flowable concentrate for seed treatment, granule, hot fogging concentrate, macrogranule, microgranule, oil dispersible powder, oil miscible flowable concentrate, oil miscible liquid, paste, plant rodlet, powder for dry seed treatment, seed coated with a pesticide, soluble concentrate, soluble powder, solution for seed treatment, suspension concentrate (flowable concentrate), suspension, water dispersible granules or tablets, water dispersible powder for slurry treatment, water soluble granules or tablets, water soluble powder for seed treatment and wettable powder. The most preferred are emulsifiable concentrate (EC), emulsion in water (EW), wettable powder (WP), flowable concentrate (FL), soluble liquid concentrate (SL), soluble powder (SP), suspension concentrate (SC), capsule suspension (CS), water dispersible granules (WG) or flowable concentrate (FL), oil dispersion (OD), and liquid concentrate for seed treatment (FS).

These compositions include not only compositions which are ready to be applied to the plant or seed to be treated by means of a suitable device, such as a spraying or dusting device, but also concentrated commercial compositions which must be diluted before they are applied to the crop.

As used herein, the term "support" or "carrier" is to be understood as meaning a natural or synthetic, organic or inorganic substance which is mixed or combined with the active substances for better applicability, in particular for application to plants or plant parts or seeds. The support or carrier, which may be solid or liquid, is generally inert and should be suitable for use in agriculture. Suitable solid or liquid carriers/supports include for example ammonium salts and natural ground minerals, such as kaolins, clays, talc, chalk, quartz, attapulgite, montmorillonite or diatomaceous earth, and ground synthetic minerals, such as finely divided silica, alumina and natural or synthetic silicates, resins, waxes, solid fertilizers, water, alcohols, especially butanol, organic solvents, mineral oils and vegetable oils, and also derivatives thereof. It is also possible to use mixtures of such supports or carriers. Solid diluents include, for example, clays such as bentonite, montmorillonite, attapulgite and kaolin, gypsum, cellulose, titanium dioxide, zinc oxide, starch, dextrin, sugars (e.g., lactose, sucrose), silica, talc, mica, diatomaceous earth, urea, calcium carbonate, sodium carbonate and bicarbonate, and sodium sulfate. Tackifiers, such as carboxymethylcellulose and natural and synthetic polymers in the form of powders, granules and latices, such as gum arabic, polyvinyl alcohol, polyvinyl acetate, or natural phospholipids, such as cephalins and lecithins and synthetic phospholipids can be used in the formulations. Other possible additives are mineral and vegetable oils and waxes, optionally modified. If the extender used is water, it is also possible for example, to use organic solvents as auxiliary solvents. Liquid diluents include, for example, water, *N,N*-dimethylalkanamides (e.g., *N,N*-dimethylformamide), limonene, dimethyl sulfoxide, *N*-alkylpyrrolidones (e.g., *N*-methylpyrrolidinone), alkyl phosphates (e.g., triethyl phosphate), ethylene glycol, triethylene glycol, propylene glycol, dipropylene glycol, polypropylene glycol, propylene carbonate, butylene carbonate, paraffins (e.g., white mineral oils, normal paraffins, isoparaffins), alkylbenzenes, alkylnaphthalenes, glycerine, glycerol triacetate, sorbitol, triacetin, aromatic hydrocarbons, dearomatized aliphatics, alkylbenzenes, alkylnaphthalenes, ketones such as cyclohexanone, 2-heptanone, isophorone and 4-hydroxy-4-methyl-2-pentanone, acetates such as isoamyl acetate, hexyl acetate, heptyl acetate, octyl acetate, nonyl acetate, tridecyl acetate and isobornyl acetate, other esters such as alkylated lactate esters, dibasic esters, alkyl and aryl benzoates and g-butyrolactone, and alcohols, which can be linear, branched, saturated or unsaturated, such as methanol, ethanol, n-propanol, isopropyl alcohol, n-butanol, isobutyl alcohol, n-hexanol, 2-ethylhexanol, n-octanol, decanol, isodecyl alcohol, isooctadecanol, cetyl alcohol, lauryl alcohol, tridecyl alcohol, oleyl alcohol, cyclohexanol, tetrahydrofurfuryl alcohol, diacetone alcohol and benzyl alcohol. Liquid diluents also include glycerol esters of saturated and unsaturated fatty acids (typically C1-C2) such as plant seed and fruit oils (e.g., oils of olive, castor, linseed, sesame, corn (maize), peanut, sunflower, grapeseed, safflower, cottonseed, soybean, rapeseed, coconut and palm kernel), animal-sourced fats (e.g., beef tallow, pork tallow, lard, cod liver oil, fish oil), and mixtures thereof. Liquid diluents also include alkylated fatty acids (e.g., methylated, ethylated, butylated) wherein the fatty acids may be obtained by hydrolysis of glycerol esters from plant and animal sources, and can be purified by distillation.

As used herein, the term "pathogen controlling" is to be understood as a method of plant disease management by the suppression/inhibition growth of plant pathogens.

The term "commercial fungicides products" used interchangeably with "commercial fungicides" is to be understood a biocidal product, which is in regular production and is sold in substantial quantities to the general public and/or industry at established catalogue or market prices, comprising at least one active ingredient and co-formulants or it may comprise only one active ingredient or at least two active ingredients or combination thereof.

The term "active ingredient", used interchangeably with "active substance", is to be understood as a component that is active against pests/plant diseases. Active substances can be chemicals or micro-organisms.

Application of MFA increased and stimulation plant defence mechanisms to fungal pathogens but does not depend on direct killing or inhibition of the invading pathogen, but on increasing immune barrier (physical or chemical) of the host plant. MFA however creates unfavourable conditions for pathogens growth, but itself it is not and cannot be used as active substance. The increased plant immunity is related to enhancement of photosynthetic activity, protein and nucleic acid synthesis. Known from literature micronutrient present in MFA has been shown to positively affect over 300 important enzymes. Beside zinc supplementation for the crops shown results prove that MFA enhanced biotic and abiotic stresses. Zinc has been shown to positively affect enzymes that protect plants from stresses (e.g., drought, heat, salt, UV, water, cold stress). In field studies, significant positive effects on the plant's health improvement (increase in plat height, improved roots and shoots growth, greener leaf colour, bigger leaf blade, enhanced plant vigour, increased stand and early and better germination, less dead basal leaves, higher productivity) of many crop species treated with MFA were found. While experiments were performed both in greenhouse and field trials, the focus was not just on the presence of pathogens, but on crop performance, including photosynthesis parameters, biomass increase and yield improvement (quantities and quality parameters).

Supplying plants with zinc helps to improve the condition of crops allows to increase yields and reduce the consumption of macronutrient fertilizers, mainly nitrogen (less input needed). Thus, it also helps to protect the environment from pollution and improve soil quality. Embodiment of the inventions can be produced in the style of a formulation like a plant protection product, which makes it fully compatible and offers a wide range of application with a wide range of crop protection products including fungicides, fertilizers and biostimulants (non-precipitating in the tank mix). The use of MFA significantly improves the fungicide functioning (summation effect), stimulates the physiological mechanisms of immunity and strengthens plants, reduces the degree of plant infection by creating unfavourable conditions for the development of harmful microorganisms.

Embodiments of the invention can provide a homogeneous formulation fully compatible with most of the fungicide products used, a stable dispersion without and in blends with other products, which is important to ensure the stability of the action of the active ingredients of biocides and fertilizers. In one embodiment, the product may be formulated as a multifunctional additive (MFA) with the fertilizing properties of the micronutrient zinc. The product can provide quick and long-term supplementation of plants with a very important microelement, but it can also have an effect that clearly goes beyond the properties of only zinc fertilizer, providing an additional effect - limiting the negative effects of the appearance of fungal pathogens. The mechanism of action of the formulation is specific, due to the combination of different chemical forms of zinc (soluble and insoluble), therefore MFA acts simultaneously as a foliar and a soil fertilizer. The zinc will by gradually up taken up from the soil by the plants, due to controlled, gradual oxidises of Zn ion form e.g., ZnO (insoluble or poorly soluble). On the other hand, a foliar spray and its supplementation of plants with zinc ions from soluble forms will be quickly and efficiently up taken by the plants. In addition to its function as a nutrient, zinc also acts as a growth promoter. Through its involvement in a number of biochemical processes that are key to plant health and yield increase. The presence of soluble carbonate salts regulates pH on plants surface and helps Zn ions to be effectively up taken. Especially, in the case of weaker infections of pathogens, the application of MFA offers the opportunity to reduce dose of fungicides to achieve the desired efficacy against pathogens due to the fact that MFA induces plants defence mechanisms and therefore lower costs and less environmental burden. Zinc fertilizers available on the market do not show any additive effect on improving the effectiveness of active substances of fungicides.

### Example 1 - A powder form of composition

The multifunctional additive (MFA) technology is a mixture of compounds in any configuration from the groups:
1. group of silver compounds (Ag²⁺ ion donor),
2. group of zinc compounds (Zn²⁺ ion donor),
3. group of soluble carbonate salts; (CO₃²⁻ ion donor),
wherein:
1) the term *silver compounds group* refers to the insoluble, poorly soluble and soluble silver salts, silver oxides such as (but not limited to): Ag₂CO₃, Ag₂SO₄, AgNO₃, Ag₃PO₄, or mixtures thereof;
2) the term oxyzinc compound refers to the insoluble, poorly soluble and soluble zinc salts of oxygen acid, but not limited to, such as: ZnCO₃, [ZnCO₃]₂·[Zn(OH)₂]₃, Zn₃(PO₄)₂, ZnSiO₃, ZnSO₄, Zn(NO₃)₂; or zinc oxide (ZnO) or mixtures thereof;
3) the term zinc salt of a halogen hydracid refers to the insoluble, poorly soluble and soluble zinc salts of oxygenless acids: ZnBr₂, ZnCl₂ or a mixture thereof;
4) the term carbonate soluble salt group refers to lithium carbonate, sodium carbonate and potassium carbonate or a mixture thereof.

A typical amount of a silver compound in the composition is from 0.50 wt% to 4.00 wt%. The typical particle size of the silver compound is in the range of 50 nm to 500 nm. It provides a larger specific surface area and range of dispersion stability and suspension stability.

A typical amount of soluble carbonates in the composition is in the range of 19.50 wt%. to 76.00 wt%.

A typical amount of a zinc compound in the composition is from 16.00 wt% up to 80.00 wt%. The typical particle size of the zinc compound is in the range of 50 nm to 500 nm. Micronization is recommended in order to obtain a larger surface area and dispersion stability area as well as suspension stability.

**Table 1. The preferred variants of MFA powder composition**

| **PURE** | **Composition** | **Formula** | **Amount of a compound in the comsotion (wt%)** | **Most preferable amount of a compound in the composition (wt%)** | **CAS** | **Role** |
|---|---|---|---|---|---|---|
| MFA1 | Zinc oxide | ZnO | 19.50 - 80.00 | 74.00 | 1314-13-2 | Zn²⁺ ion donor |
| | Silver carbonate | Ag₂CO₃ | 0.50-4.00 | 1.30 | 534-16-7 | Ag²⁺ ion donor |
| | Sodium carbonate | Na₂CO₃ | 19.50 - 76.00 | 24.70 | 497-19-8 | CO₃²⁻ ion donor |
| MFA1.1 | Zinc oxide | ZnO | 20.00 - 80.00 | 69.00 | 1314-13-2 | Zn²⁺ ion donor |
| | Silver carbonate | Ag₂CO₃ | 0.50-4.00 | 1.60 | 534-16-7 | Ag²⁺ ion donor |
| | Zinc chloride anhydrous | ZnCl₂ | 16.00 - 40.00 | 29.40 | 7646-85-7 | Zn²⁺/ Cl²⁺ ion donor |
| MFA1.2 | Zinc oxide | ZnO | 20.00 - 80.00 | 20.00 | 1314-13-2 | Zn²⁺ ion donor |
| | Silver carbonate | Ag₂CO₃ | 0.50 - 4.00 | 4.00 | 534-16-7 | Ag²⁺ ion donor |
| | Zinc sulphate heptahydrate | ZnSO₄·7H₂O | 20.00 - 76.00 | 76.00 | 7646-85-7 | Zn²⁺ ion donor |
| MFA2 | Basic zinc carbonate | [ZnCO₃]₂·Zn(OH)₂]₃ | 20.00 - 80.00 | 80.00 | 5263-02-5 | Zn²⁺ ion donor |
| | Silver carbonate | Ag₂CO₃ | 0.50-4.00 | 0.50 | 534-16-7 | Ag²⁺ ion donor |
| | Zinc sulphate heptahydrate | ZnSO₄·7H₂O | 19.00 - 76.00 | 19.50 | 7646-85-7 | Zn²⁺ ion donor |
| MFA3 | Basic zinc carbonate | ZnSiO₃ | 20.00 - 80.00 | 20.00 | 32678-67-4 | Zn²⁺ ion donor |
| | Silver carbonate | Ag₂CO₃ | 0.50-4.00 | 4.00 | 534-16-7 | Ag²⁺ ion donor |
| | Sodium carbonate | Na₂CO₃ | 19.50 - 76.00 | 76.00 | 7646-85-7 | Zn²⁺/ Cl²⁺ ion donor |
| MFA4 | Zinc metasilicate | ZnSiO₃ | 20.00 - 80.00 | 80.00 | 32678-67-4 | Zn²⁺ ion donor |
| | Silver carbonate | Ag₂CO₃ | 0.50-4.00 | 4.00 | 534-16-7 | Ag²⁺ ion donor |
| | Zinc chloride anhydrous | ZnCl₂ | 16.00 - 40.00 | 16.00 | 7646-85-7 | Zn²⁺/ Cl²⁺ ion donor |

### Preparation of millbase MFA1

In order to prepare the following solid composition (millbase), the following amounts of ingredients were weighed: 74.00 wt% of a ZnO, 1.30 wt% of a Ag₂CO₃, and 24.70 wt% of a Na₂CO₃. All ingredients were loaded into the mill, millbase was prepared using an Eiger bead mill with 1-1.3 mm glass beads; milling was at ca. 3000 rpm for 20 min per kg of millbase.

### Preparation of millbase MFA1.1

In order to prepare the following solid composition (millbase), the following amounts of ingredients were weighed: 68.00 wt% of a ZnO, 1.60 wt% of a Ag₂CO₃, and 29.40 wt% of a ZnCl_{2.} All ingredients were loaded into the mill, millbase was prepared using an Eiger bead mill with 1-1.3 mm glass beads; milling was at ca. 3000 rpm for 20 min per kg of millbase.

### Preparation of millbase MFA1.2

In order to prepare the following solid composition (millbase), the following amounts of ingredients were weighed: 20.00 wt% of a ZnO, 4.00 wt% of a Ag₂CO₃, and 76.00 wt% of a ZnSO₄·7H₂O_{.} All ingredients were loaded into the mill, millbase was prepared using an Eiger bead mill with 1-1.3 mm glass beads; milling was at ca. 3000 rpm for 20 min per kg of millbase.

### Preparation of millbase MFA2

In order to prepare the following solid composition (millbase), the following amounts of ingredients were weighed: 80.00 wt% of a [ZnCO₃]₂·[Zn(OH)₂]₃, 0.50 wt% of a Ag₂CO₃, and 19.50 wt% of a ZnSO₄·7H₂O. All ingredients were loaded into the mill, millbase was prepared using an Eiger bead mill with 1-1.3 mm glass beads; milling was at ca. 3000 rpm for 20 min per kg of millbase.

### Preparation of millbase MFA3

In order to prepare the following solid composition (millbase), the following amounts of ingredients were weighed: 20.00 wt% of a ZnSiO₃, 4.00 wt% of a Ag₂CO₃, and 76.00 wt% of a Na₂CO_{3.} All ingredients were loaded into the mill, millbase was prepared using an Eiger bead mill with 1-1.3 mm glass beads; milling was at ca. 3000 rpm for 20 min per kg of millbase.

### Preparation of millbase MFA4

In order to prepare the following solid composition (millbase), the following amounts of ingredients were weighed: 80.00 wt% of a ZnSiO₃, 4.00 wt% of a Ag₂CO₃, and 16.00 wt% of a ZnCl2. All ingredients were loaded into the mill, millbase was prepared using an Eiger bead mill with 1-1.3 mm glass beads; milling was at ca. 3000 rpm for 20 min per kg of millbase.

### Example 2

The MFA1 mixture was developed to investigate the combined action effects resulting from the incorporation of inorganic salt mixtures into fungicide formulations. A stable formulation was needed for testing, which met the following criteria: appearance after storage for 1 month at 20°C +/- 5°C. The product should remain pourable. If any separation, sedimentation or claying is observed, it should be possible to rehomogenise the formulation by no more than 50 inversions.

To prepare the MFA1 solo liquid formulation, a screening test was first performed to find the best dispersant. Dispersions have been prepared on the basis of the form according to Example 1. A range of common dispersants approved for agrochemical formulations were screened along with other less commonly used dispersants designed to disperse insoluble inorganic salts in water. The dispersants were prepared as 10% aqueous solutions. These were added to 5.4 g of each powder multifunctional additive (MFA), as defined in Example 1, and the amount required to give low viscosity determined; a lower amount required gave an indication of good dispersion. The total quantity of dispersant solution added was then increased to 15 g, after which the dispersion was allowed to settle for two days; the final percentage separation also gave an indication of the quality of the dispersion; greater separation was likely to indicate better dispersion. The sedimentation after 2 days at 50°C was also determined to assess the quality of the dispersant at higher temperatures. The physical properties of the dispersion after 2 days also gave an idea of how well the dispersant was working; solids and gels showed bad dispersion, whilst a product that was easily rehomogenised to a low viscosity liquid indicated good dispersion.

**Table 2. The results of dispersant screening for MFA1**

| **Dispersant - chemical structure** | **Weight for low viscosity (g)** | **% separation - 2 days** | **Physical form** | **Microscope appearance** | **Disperant quality** | **Colour - 2days** |
|---|---|---|---|---|---|---|
| Not applicable | 15.0 | 23.0 | Gel | Not done | Very Bad | Grey |
| Tristyrylphenol ethoxy phosphate ester, potassium salt | 15.0 | 0.0 | Gel | Not done | Very Bad | Dark grey |
| Acrylic PEG copolymer | 15.0 | 0.0 | Gel | Not done | Very Bad | Pink |
| Naphthalene sulphonate condensate | 7.2 | 45.0 | Liquid by shaking | Partially dispersed | Average | Dark grey |
| Butyl AB block copolymer | >15.0 | 0.0 | Gel | Not done | Very Bad | Pink |
| Polymeric amphoteric dispersant | 6.4 | 63.0 | Sticky sediment | Flocculated | Bad | Blue |
| Maleic acid, olefin copolymer, sodium salt | 6.3 | 56.0 | Liquid by shaking | Partially dispersed | Average | Blue |
| Polycarboxylate, sodium salt, partially neutralised | 7.4 | 43.0 | Liquid by shaking | Flocculated | Average | Blue |
| Modified polycarboxylate, sodium salt | 7.0 | 42.0 | Liquid by shaking | Flocculated | Average | Blue |

None of the dispersants was able to disperse well MFA1. All the traditional agrochemical dispersants except for were bad; the remaining dispersants were average in performance. Maleic acid, olefin copolymer, sodium salt gave good dispersancy, the only dispersant which has been found to be effective for the MFA1. It was decided to prepare a formulation of using. Finally, some samples were viewed under the microscope to determine how well the particles were dispersed visually. Another problem observed with the MFA1 dispersions was that they all changed colour significantly after 2 days in room light conditions. This suggested that a chemical reaction was taking place, probably related to the silver carbonate as silver salts are known to be light sensitive under certain conditions.

### Preparation of MFA1 solo liquid formulation

**Table 3. The components of the formulation in the order of their addition to the blender bowl**

| **Ingredients / Chemical name** | **Amount of a compound in the composition (wt%)** | **Most preferable amount of a compound in the composition (wt%)** | **Role** | **CAS** |
|---|---|---|---|---|
| Tap water | 42.00-44.00 | 42.54 | liquid carrier | ---- |
| Polydimethylsiloxane oil | 0.30-0.40 | 0.30 | defoaming agent | 9016-00-6 |
| Maleic acid, olefin copolymer, sodium salt | 3.00-10.00 | 3.92 | dispersant | 52255-49-9 |
| 1,2-benzisothiazolin-3-one | 0.12 - 0.20 | 0.14 | microbiostat preservative | 2634-33-5 |
| Propylene glycol | 6.00 - 8.00 | 7.10 | antifreeze | 57-55-6 |
| MFA1 | 25.00 - 40.00 | 36.00 | multifunctional additive | According to the invention |

The powder multifunctional additive was added whilst the liquid was being high-sheared with a Silverson blender with a small-hole head. Mixing was continued for 15 min at 5000 rpm. This gave the following particle size distribution prior to milling: d(50) -1.3 µm d(90) - 35 µm d(max) - 150 µm. The millbase was then milled in a Dynomill KDL with the following parameters applied: 1-1.3 mm glass beads, 4°C chiller, 600 ml chamber, 720 g beads, 0.3 mm spacer, input via peristaltic pump 30 rpm, mill time 18 min per kg.

This produced a particle size distribution with d(50) - 0.8 µm, d(90) - 2.5 µm, d(max) - 30 µm, which was within the target for a good solid suspension product. A thickener gel was prepared by blending xanthan gum (CAS: 11138-66-2) (2 wt%) into water (98 wt%) using a Silverson mixer, blending was for 15 min at 8000 rpm. Thickener gel (10 wt%) was blended with the millbase using a paddle stirrer; next a Silverson high shear mixer was used, blending for 15 min at 5000 rpm. Having done this, an easily pourable, homogenous grey liquid suspension was obtained.

At the stage of preparing the target liquid formulations, it turned out that it was necessary to optimize the MFA composition. Problems were observed with ensuring the stability and proper dispersion of the prepared formulations. A high pH was observed causing the decomposition of active substances (fungicides) and accelerated sedimentation of the ingredients, resulting from the high density. It is known that the pH parameter of a formulation is crucial for the efficacy of active substances and their chemical stability in the finished formulation. Another problem observed with the MFA1 dispersions was that they all changed colour significantly after 2 days in room light conditions. This suggested that a chemical reaction was taking place, probably related to the silver carbonate as silver salts are known to be light sensitive under certain conditions.

The result was the development of the version of the mixture, i.e., MFA1.1, MFA1.2; MFA2; MFA3; MFA4 and matching the appropriate dispersant to ensure the stability of the formulation and dispersion MFA solo and in combination with active substances. The dispersants were tested with MFA1.1, MFA1.2; MFA2; MFA3; MFA4 in the same way as for MFA1. A range of common dispersants approved for agrochemical formulations were screened along with other less commonly used dispersants designed to disperse insoluble inorganic salts in water. The dispersants were prepared as 10% aqueous solutions. These were added to 5.4 g of each powder multifunctional additive (MFA), as defined in Example 1, and the amount required to give low viscosity determined; a lower amount required gave an indication of good dispersion. The total quantity of dispersant solution added was then increased to 15 g, after which the dispersion was allowed to settle for two days; the final percentage separation also gave an indication of the quality of the dispersion; greater separation was likely to indicate better dispersion. The sedimentation after 3 days at 50°C was also determined to assess the quality of the dispersant at higher temperatures. Maleic acid-acrylic acid copolymer, sodium salt and modified polycarboxylate, sodium salt, proved to be the best dispersants. All the formulations contained an antifreeze, an microbiostat preservative, and defoaming agent; these were included at a level that is typical for commercial SC products. A thickening agent was added at a concentration level to ensure good particle suspensibility whilst maintaining good pourability for the formulation.

With this identification of good dispersants for MFA and having found which dispersants would definitely be incompatible with MFA1 and MFA1.1, a series of formulations were designed comprising a mixture of MFA1 or MFA1.1 with each of the fungicides.

**Table 4. The results of dispersant for MFA1.1**

| **Chemical Structure/Name** | **Weight for low viscosity (g)** | **% separation - 2 days** | **Physical Form** | **Dispersant Quality** | **Colour - 2 days** |
|---|---|---|---|---|---|
| Not applicable | 15.0 | 23.0 | Gel | Very Bad | Grey |
| Naphthalene condensate sulphonate | 6.1 | 44.0 | Liquid by shaking | Average | Pale grey |
| Dioctylsulphosuccinate, sodium salt | 8.0 | 45.0 | Liquid by shaking | Average | Pale grey |
| Maleic acid, olefin copolymer, sodium salt | >15.0 | 0.0 | Paste | Very Bad | Pale grey |
| Modified polycarboxylate, sodium salt | >15.0 | 0.0 | Paste | Very Bad | Pale grey |
| Polycarboxylate, sodium salt, partially neutralised | 15.0 | 0.0 | Gel | Very Bad | Pale grey |
| Modified polycarboxylate, sodium salt | 2.0 | 63.0 | Liquid by shaking | Very good | Pale grey |

The results were quite different to those of MFA1 Modified polycarboxylate, sodium salt gave excellent dispersancy, the only dispersant which has been found to be effective for the MFA1.1 type products. In contrast, the other three products were all found to be very bad dispersants for MFA 1.1. Naphthalene sulphonate condensate and dioctylsulphosuccinate sodium salt gave average dispersancy. Another positive feature of the MFA1.1 dispersions was that no colour change was observed with any of them, suggesting improved chemical stability compared to MFA1. All dispersants gave much better dispersion than in the control with no dispersant added. With this identification of good dispersants for MFA and MFA1.1 having found which dispersants would definitely be incompatible with MFA1 and MFA1.1, a series of formulations were designed comprising a mixture of MFA1.2; MFA2; MFA3; and MFA4.

### Preparation of the MFA1.1 solo liquid formulation

**Table 5. The components of the formulation in order of their addition to the blender bowl**

| **Ingredients / Chemical name** | **Amount of a compound in the composition (wt%)** | **Most preferable amount of a compound in the composition (wt%)** | **Role** | **CAS** |
|---|---|---|---|---|
| Tap water | 30.00 - 40.00 | 31.50 | liquid carrier | ---- |
| Polydimethylsiloxane oil | 0.21 - 0.31 | 0.21 | defoaming agent | 9016-00-6 |
| Polycarboxylate modified, sodium salt | 5.00-15.00 | 8.60 | dispersant | 37199-81-8 |
| 1,2-benzisothiazolin-3-one | 0.10-0.15 | 0.10 | microbiostat preservative | 2634-33-5 |
| Propylene glycol | 4.00 - 7.00 | 5.27 | antifreeze | 57-55-6 |
| MFA1.1 | 15.00 - 30.00 | 25.62 | multifunctional additive | According to the invention |

The powder multifunctional additive was added whilst the liquid was being high-sheared with a Silverson blender with a small-hole head. Mixing was continued for 15 min at 5000 rpm. This gave the following particle size distribution prior to milling: d(50) -1.3 µm d(90) 35 µm d(max) 150 µm. The millbase was then milled in a Dynomill KDL with the following parameters applied: 1-1.3 mm glass beads, 4°C chiller, 600 ml chamber, 720 g beads, 0.3 mm spacer, input via peristaltic pump 30 rpm, and mill time 18 min per kg.

This produced a particle size distribution with d(50) - 0.8 µm, d(90) - 2.5 µm, d(max) - 30 µm, which was within the target for a good solid suspension product. A thickener gel was prepared by blending xanthan gum (CAS: 11138-66-2) (2 wt%) into water (98 wt%) using a Silverson mixer, blending was for 15 min at 8000 rpm. Thickener gel was blended (28.70 wt%) with the millbase using a paddle stirrer; next a Silverson high shear mixer was used, blending for 15 min at 5000 rpm. Having done this, an easily pourable, homogenous grey liquid suspension was obtained.

### Preparation of the MFA1.2 solo liquid formulation

**Table 6. The components of the formulation in order of their addition to the blender bowl**

| **Ingredients / Chemical name** | **Amount of a compound in the composition (wt%)** | **Most preferable amount of a compound in the composition (wt%)** | **Role** | **CAS** |
|---|---|---|---|---|
| Tap water | 30.00 - 40.00 | 35.00 | liquid carrier | ---- |
| Polydimethylsiloxane oil | 0.21 - 0.31 | 0.21 | defoaming agent | 9016-00-6 |
| Polycarboxylate modified, sodium salt | 5.00 - 15.00 | 9.00 | dispersant | 37199-81-8 |
| 1,2-benzisothiazolin-3-one | 0.10-0.15 | 0.10 | microbiostat preservative | 2634-33-5 |
| Propylene glycol | 4.00 - 7.00 | 5.27 | antifreeze | 57-55-6 |
| MFA1.2 | 15.00 - 30.00 | 24.00 | multifunctional additive | According to the invention |

The powder multifunctional additive was added whilst the liquid was being high-sheared with a Silverson blender with a small-hole head. Mixing was continued for 15 min at 5000 rpm. This gave the following particle size distribution prior to milling: d(50) -1.3 µm d(90) 35 µm d(max) 150 µm. The millbase was then milled in a Dynomill KDL with the following parameters applied: 1-1.3 mm glass beads, 4°C chiller, 600 ml chamber, 720 g beads, 0.3 mm spacer, Input via peristaltic pump 30 rpm, and mill time 18 min per kg.

This gave them a particle size distribution with d(50) - 0.8 µm, d(90) - 2.5 µm, d(max) - 30 µm, which was within the target for a good solid suspension product. A thickener gel was prepared by blending xanthan gum (CAS: 11138-66-2) (2 wt%) into water (98 wt%) using a Silverson mixer, blending was for 15 min at 8000 rpm. Thickener gel was blended (26.40 wt%) with the millbase using a paddle stirrer; next a Silverson high shear mixer was used, blending for 15 min at 5000 rpm. Having done this, an easily pourable, homogenous grey liquid suspension was obtained.

### Preparation of the MFA2 solo liquid formulation

**Table 7. The components of the formulation in order of their addition to the blender bowl**

| **Ingredients / Chemical name** | **Amount of a compound in the composition (wt%)** | **Most preferable amount of a compound in the composition (wt%)** | **Role** | **CAS** |
|---|---|---|---|---|
| Tap water | 30.00 - 40.00 | 40.00 | liquid carrier | ---- |
| Polydimethylsiloxane oil | 0.21 - 0.31 | 0.21 | defoaming agent | 9016-00-6 |
| Polycarboxylate modified, sodium salt | 5.00-15.00 | 9.00 | dispersant | 37199-81-8 |
| 1,2-benzisothiazolin-3-one | 0.10-0.15 | 0.10 | microbiostat preservative | 2634-33-5 |
| Propylene glycol | 4.00 - 7.00 | 5.25 | antifreeze | 57-55-6 |
| MFA2 | 15.00 - 40.00 | 30.00 | multifunctional additive | According to the invention |

The powder multifunctional additive was added whilst the liquid was being high-sheared with a Silverson blender with a small-hole head. Mixing was continued for 15 min at 5000 rpm. This gave the following particle size distribution prior to milling: d(50) -1.3 µm d(90) 35 µm d(max) 150 µm. The millbase was then milled in a Dynomill KDL with the following parameters applied: 1-1.3 mm glass beads, 4°C chiller, 600 ml chamber, 720 g beads, 0.3 mm spacer, Input via peristaltic pump 30 rpm, and mill time 18 min per kg.

This gave them a particle size distribution with d(50) - 0.8 µm, d(90) - 2.5 µm, d(max) - 30 µm, which was within the target for a good solid suspension product. A thickener gel was prepared by blending xanthan gum (CAS: 11138-66-2) (2 wt%) into water (98 wt%) using a Silverson mixer, blending was for 15 min at 8000 rpm. Thickener gel was blended (15.44 wt%) with the millbase using a paddle stirrer; next a Silverson high shear mixer was used, blending for 15 min at 5000 rpm. Having done this, an easily pourable, homogenous grey liquid suspension was obtained.

### Preparation of MFA3 solo liquid formulation

**Table 8. The components of the formulation in order of their addition to the blender bowl**

| **Ingredients / Chemical name** | **Amount of a compound in the composition (wt%)** | **Most preferable amount of a compound in the composition (wt%)** | **Role** | **CAS** |
|---|---|---|---|---|
| Tap water | 40.00-45.00 | 42.50 | liquid carrier | ---- |
| Polydimethylsiloxane oil | 0.30-0.35 | 0.30 | defoaming agent | 9016-00-6 |
| Maleic acid, olefin copolymer, sodium salt | 3.00-10.00 | 3.92 | dispersant | 52255-49-9 |
| 1,2-benzisothiazolin-3-one | 0.12-0.20 | 0.14 | microbiostat preservative | 2634-33-5 |
| Propylene glycol | 6.00 - 8.00 | 7.10 | antifreeze | 57-55-6 |
| MFA3 | 25.00 - 40.00 | 33.00 | multifunctional additive | According to the invention |

The powder multifunctional additive was added whilst the liquid was being high-sheared with a Silverson blender with a small-hole head. Mixing was continued for 15 min at 5000 rpm. This gave the following particle size distribution prior to milling: d(50) - 1.3 µm d(90) - 35 µm d(max) - 150 µm. The millbase was then milled in a Dynomill KDL with the following parameters applied: 1-1.3 mm glass beads, 4°C chiller, 600 ml chamber, 720 g beads, 0.3 mm spacer, input via peristaltic pump 30 rpm, and mill time 20 min per kg.

This gave them a particle size distribution with d(50) - 0.8 µm, d(90) - 2.5 µm, d(max) - 30 µm, which was within the target for a good solid suspension product. A thickener gel was prepared by blending xanthan gum (CAS: 11138-66-2) (2 wt%) into water (98 wt%) using a Silverson mixer, blending was for 15 min at 8000 rpm. Thickener gel (13.04 wt%) was blended with the millbase using a paddle stirrer; next a Silverson high shear mixer was used, blending for 15 min at 5000 rpm. Having done this, an easily pourable, homogenous grey liquid suspension was obtained.

### Preparation of the MFA4 solo liquid formulation

**Table 9. The components of the formulation in order of their addition to the blender bowl**

| **Ingredients / Chemical name** | **Amount of a compound in the composition (wt%)** | **Most preferable amount of a compound in the composition (wt%)** | **Role** | **CAS** |
|---|---|---|---|---|
| Tap water | 30.00 - 40.00 | 31.50 | liquid carrier | ---- |
| Polydimethylsiloxane oil | 0.21 - 0.31 | 0.21 | defoaming agent | 9016-00-6 |
| Polycarboxylate modified, sodium salt | 5.00 - 15.00 | 8.60 | dispersant | 37199-81-8 |
| 1,2-benzisothiazolin-3-one | 0.10-0.15 | 0.10 | microbiostat preservative | 2634-33-5 |
| Propylene glycol | 4.00 - 7.00 | 5.27 | antifreeze | 57-55-6 |
| MFA4 | 15.00 - 30.00 | 25.62 | multifunctional additive | According to the invention |

The powder multifunctional additive was added whilst the liquid was being high-sheared with a Silverson blender with a small-hole head. Mixing was continued for 15 min at 5000 rpm. This gave the following particle size distribution prior to milling: d(50) -1.3 µm d(90) 35 µm d(max) 150 µm. The millbase was then milled in a Dynomill KDL with the following parameters applied: 1-1.3 mm glass beads, 4°C chiller, 600 ml chamber, 720 g beads, 0.3 mm spacer, Input via peristaltic pump 30 rpm, and mill time 18 min per kg.

This gave them a particle size distribution with d(50) - 0.8 µm, d(90) - 2.5 µm, d(max) - 30 µm, which was within the target for a good solid suspension product. A thickener gel was prepared by blending xanthan gum (CAS: 11138-66-2) (2 wt%) into water (98 wt%) using a Silverson mixer, blending was for 15 min at 8000 rpm. Thickener gel was blended (28.70 wt%) with the millbase using a paddle stirrer; next a Silverson high shear mixer was used, blending for 15 min at 5000 rpm. Having done this, an easily pourable, homogenous grey liquid suspension was obtained.

### Example 3 - Preparation of fungicidal active ingredients combined with MFA1 or MFA1.1

After identification of good and compatible dispersants (screening described above) -for MFA were designed a series of formulations comprising a mixture of MFA1 or MFA1.1 with selected of the active ingredients. The developed preparations differed in terms of: the type of formulations (SC, WP), the type and content of the fungicidal active ingredients; MFA content and the type and content of surfactants. For two active ingredients it was decided to formulate as wettable powder (WP) formulations, because (WP) formulations contains a high concentration of the active ingredient and must gave long term chemical stability on storage.

### Preparation of azoxystrobin + MFA1.1 liquid formulation (suspension concentrate)

**Table 10. The components of the formulation in order of their addition to the blender bowl**

| **Ingredients / Chemical name** | **Amount of a compound in the composition (wt%)** | **Most preferable amount of a compound in the composition (wt%)** | **Role** | **CAS** |
|---|---|---|---|---|
| Tap water | 35.00 - 41.00 | 39.70 | liquid carrier | ---- |
| Polydimethylsiloxane oil | 0.30 - 0.35 | 0.30 | defoaming agent | 9016-00-6 |
| Polycarboxylate modified, sodium salt | 5.00 - 10.00 | 7.15 | dispersant | 37199-81-8 |
| Sodium salt of naphthalene sulfonate condensate | 1.50 - 2.00 | 1.50 | dispersant | 9084-06-4 |
| 1,2-benzisothiazolin-3-one | 0.15 - 0.20 | 0.15 | microbiostat preservative | 2634-33-5 |
| Propylene glycol | 7.50 - 8.50 | 7.50 | antifreeze | 57-55-6 |
| Azoxystrobin | 10.00 - 18.00 | 16.10 | active substance | 131860-33-8 |
| MFA1.1 | 10.00 -18.00 | 16.10 | multifunctional additive | According to the invention |

The powder multifunctional additive was added whilst the liquid was being high-sheared with a Silverson blender with a small-hole head. Mixing was continued for 15 min at 5000 rpm. The MFA 1.1 was added whilst the liquid was being high-sheared with a Silverson blender with a small-hole head. Mixing was continued for 15 min at 5000 rpm. The millbase was then milled in a Eiger Mill with the following parameters applied: 1-1.3 mm glass beads, 4°C chiller, 250 ml chamber, 300 g beads, 0.25 mm spacer, Input via peristaltic pump 30 rpm, and mill time 10 min per kg.

Obtained particles had size distribution of d(50) - 2.0 µm, d(90) - 5.4 µm, which was within target for a good solid suspension product. A thickener gel was prepared by blending xanthan gum (CAS: 11138-66-2) (2 wt%) into water (98 wt%) using a Silverson mixer, blending was for 15 min at 8000 rpm. Thickener gel was blended (11.50 wt%) with the millbase using a paddle stirrer; next a Silverson high shear mixer was used, blending for 15 min at 5000 rpm. Having done this, an easily pourable, homogenous grey liquid suspension was obtained.

### Preparation of fludioxonil + MFA1.1 liquid formulation (suspension concentrate)

**Table 11. The components of the formulation in order of their addition to the blender bowl**

| **Ingredients / Chemical name** | **Amount of a compound in the composition (wt%)** | **Most preferable amount of a compound in the composition (wt%)** | **Role** | **CAS** |
|---|---|---|---|---|
| Tap water | 30.00 - 40.00 | 32.00 | liquid carrier | ---- |
| Polydimethylsiloxane oil | 0.25-0.35 | 0.30 | defoaming agent | 9016-00-6 |
| Polycarboxylate modified, sodium salt | 5.00-10.00 | 7.70 | dispersant | 37199-81-8 |
| Acrylic PEG copolymer | 1.50-2.00 | 1.50 | dispersant | 9084-06-4 |
| 1,2-benzisothiazolin-3-one | 0.15-0.20 | 0.15 | microbiostat preservative | 2634-33-5 |
| Propylene glycol | 5.50 - 8.50 | 6.50 | antifreeze | 57-55-6 |
| Fludioxonil | 10.00 - 18.00 | 11.50 | active substance | 131341-86-1 |
| MFA1.1 | 10.00 - 30.00 | 23.10 | multifunctional additive | According to the invention |

The powder multifunctional additive was added whilst the liquid was being high-sheared with a Silverson blender with a small-hole head. Mixing was continued for 15 min at 5000 rpm. The MFA 1.1 was added whilst the liquid was being high-sheared with a Silverson blender with a small-hole head. Mixing was continued for 15 min at 5000 rpm. The millbase was then milled in a Eiger Mill with the following parameters applied: 1-1.3 mm glass beads, 4°C chiller, 250 ml chamber, 300 g beads, 0.25 mm spacer, Input via peristaltic pump 30 rpm, and mill time 20 min per kg.

Obtained particles had size distribution of d(50) - 2.0 µm, d(90) - 5.5 µm, which was within target for a good solid suspension product. A thickener gel was prepared by blending xanthan gum (CAS: 11138-66-2) (2 wt%) into water (98 wt%) using a Silverson mixer, blending was for 15 min at 8000 rpm. Thickener gel was blended (17.30 wt%) with the millbase using a paddle stirrer; next a Silverson high shear mixer was used, blending for 15 min at 5000 rpm. Having done this, an easily pourable, homogenous grey liquid suspension was obtained.

### Preparation of piraclostrobin + boscalid + MFA1.1 liquid formulation (suspension concentrate)

**Table 12. The components of the formulation in order of their addition to the blender bowl**

| **Ingredients / Chemical name** | **Amount of a compound in the composition (wt%)** | **Most preferable amount of a compound in the composition (wt%)** | **Role** | **CAS** |
|---|---|---|---|---|
| Tap water | 30.00 - 40.00 | 33.80 | liquid carrier | ---- |
| Polydimethylsiloxane oil | 0.25 - 0.35 | 0.30 | defoaming agent | 9016-00-6 |
| Polycarboxylate modified, sodium salt | 5.00 - 10.00 | 7.00 | dispersant | 37199-81-8 |
| Acrylic PEG copolymer | 1.00 - 2.00 | 1.00 | dispersant | 9084-06-4 |
| Sodium lignosulphonate | 1.00 - 2.00 | 1.00 | dispersant | 8061-51-6 |
| 1,2-benzisothiazolin-3-one | 0.15-0.20 | 0.15 | microbiostat preservative | 2634-33-5 |
| Propylene glycol | 3.00 - 7.50 | 3.50 | antifreeze | 57-55-6 |
| Pyraclostrobin | 4.00 - 8.00 | 5.40 | active substance | 175013-18-0 |
| Boscalid | 15.00 - 25.00 | 21.00 | active substance | 188425-85-6 |
| MFA1.1 | 10.00 - 30.00 | 15.40 | multifunctional additive | According to the invention |

The powder multifunctional additive was added whilst the liquid was being high-sheared with a Silverson blender with a small-hole head. Mixing was continued for 15 min at 5000 rpm. The MFA 1.1 was added whilst the liquid was being high-sheared with a Silverson blender with a small-hole head. Mixing was continued for 15 min at 3500 rpm. The millbase was then milled in a Eiger Mill with the following parameters applied: 1-1.3 mm glass beads, 4°C chiller, 250 ml chamber, 300 g beads, 0.25 mm spacer, Input via peristaltic pump 30 rpm, and mill time 15 min per kg.

Obtained particles had size distribution of d(50) - 2.0 µm, d(90) - 5.5 µm, which was within target for a good solid suspension product. A thickener gel was prepared by blending xanthan gum (CAS: 11138-66-2) (2 wt%) into water (98 wt%) using a Silverson mixer, blending was for 15 min at 8000 rpm. Thickener gel was blended (11.50 wt%) with the millbase using a paddle stirrer; next a Silverson high shear mixer was used, blending for 15 min at 5000 rpm. Having done this, an easily pourable, homogenous grey liquid suspension was obtained.

### Preparation of fluopicolide + MFA1 liquid formulation (suspension concentrate)

**Table 13. The components of the formulation in order of their addition to the blender bowl**

| **Ingredients / Chemical name** | **Amount of a compound in the composition (wt%)** | **Most preferable amount of a compound in the composition (wt%)** | **Role** | **CAS** |
|---|---|---|---|---|
| Tap water | 45.00 - 60.00 | 51.90 | liquid carrier | ---- |
| Polydimethylsiloxane oil | 0.25 - 0.35 | 0.25 | defoaming agent | 9016-00-6 |
| Maleic acid, olefin copolymer, sodium salt | 2.00-8.00 | 2.05 | dispersant | 52255-49-9 |
| Sodium salt of naphthalene sulfonate condensate | 1.00-2.00 | 1.35 | dispersant | 9084-06-4 |
| 1,2-benzisothiazolin-3-one | 0.10 - 0.20 | 0.13 | microbiostat preservative | 2634-33-5 |
| Propylene glycol | 5.50 - 8.50 | 6.60 | antifreeze | 57-55-6 |
| Fluopicolide | 10.00 - 20.00 | 16.10 | active substance | 239110-15-7 |
| MFA1 | 10.00 - 20.00 | 15.60 | multifunctional additive | According to the invention |

The powder multifunctional additive was added whilst the liquid was being high-sheared with a Silverson blender with a small-hole head. Mixing was continued for 15 min at 5000 rpm. The MFA 1.1 was added whilst the liquid was being high-sheared with a Silverson blender with a small-hole head. Mixing was continued for 15 min at 5000 rpm. The millbase was then milled in a Eiger Mill with the following parameters applied: 1-1.3 mm glass beads, 4°C chiller, 250 ml chamber, 300 g beads, 0.25 mm spacer, Input via peristaltic pump 30 rpm, and mill time 30 min per kg.

Obtained particles had size distribution of d(50) - 1.8 µm, d(90) - 4.9 µm, which was within target for a good solid suspension product. A thickener gel was prepared by blending xanthan gum (CAS: 11138-66-2) (2 wt%) into water (98 wt%) using a Silverson mixer, blending was for 15 min at 8000 rpm. Thickener gel was blended (17.30 wt%) with the millbase using a paddle stirrer; next a Silverson high shear mixer was used, blending for 15 min at 5000 rpm. Having done this, an easily pourable, homogenous grey liquid suspension was obtained.

### Preparation of prothioconazole + MFA1.1 formulation (wettable powder)

**Table 14. The components of the formulation in order of their addition to the blender bowl**

| **Ingredients / Chemical name** | **Amount of a compound in the composition (wt%)** | **Most preferable amount of a compound in the composition (wt%)** | **Role** | **CAS** |
|---|---|---|---|---|
| Modified styrene acrylic polymer | 2.00 - 5.00 | 3.81 | dispersant | |
| Kaolin | 15.00 - 30.00 | 20.73 | fillers | 1332-58-7 |
| Sodium lauryl sulfate | 2.00 - 8.00 | 5.00 | dispersant | 52255-49-9 |
| Sodium salt of naphthalene sulfonate condensate | 1.00 - 2.00 | 1.90 | dispersant | 9084-06-4 |
| Prothioconazole | 10.00 - 45.00 | 34.30 | active substance | 178928-70-6 |
| MFA1.1 | 10.00 - 45.00 | 34.30 | multifunctional additive | According to the invention |

The WP batches were prepared in a blender to ensure that all the reagents were fully homogenised prior to being passed through an air mill. The millbase was then milled in a Eiger Mill with the following parameters applied: 1-1.3 mm glass beads, 4°C chiller, 250 ml chamber, 300 g beads, 0.25 mm spacer, Input via peristaltic pump 30 rpm, and mill time 30 min per kg.

Obtained particles had size distribution of d(50) - 1.8 µm, d(90) - 4.9 µm, which was within target for a good wettable powder product.

### Preparation of fluopyram + MFA1.1 formulation (wettable powder)

**Table 15. The components of the formulation in order of their addition to the blender bowl**

| **Ingredients / Chemical name** | **Amount of a compound in the composition (wt%)** | **Most preferable amount of a compound in the composition (wt%)** | **Role** | **CAS** |
|---|---|---|---|---|
| Modified styrene acrylic polymer | 2.00 - 5.00 | 4.00 | dispersant | ------- |
| Sedimentary kaolinite | 15.00 - 30.00 | 17.00 | fillers | 1332-58-7 |
| Sodium lauryl sulfate | 2.00 - 8.00 | 5.00 | dispersant | 52255-49-9 |
| Sodium salt of naphthalene sulfonate condensate | 1.00 - 2.00 | 2.00 | dispersant | 9084-06-4 |
| Fluopyram | 10.00 - 45.00 | 36.00 | active substance | 658066-35-4 |
| MFA1.1 | 10.00 - 45.00 | 36.00 | multifunctional additive | According to the invention |

The WP batches were prepared in a blender to ensure that all the reagents were fully homogenised prior to being passed through an air mill. The millbase was then milled in a Eiger Mill with the following parameters applied: 1-1.3 mm glass beads, 4°C chiller, 250 ml chamber, 300 g beads, 0.25 mm spacer, Input via peristaltic pump 30 rpm, and mill time 30 min per kg.

Obtained particles had size distribution of d(50) - 1.8 µm, d(90) - 4.9 µm, which was within target for a good wettable powder product.

### Accelerated aging and stability testing

For a liquid formulations MFA solo as well as fungicidal active ingredients and MFA suspension concentrate were stored in accelerated thermal conditions to identify suitability for further formulation development. Products were tested for aging at reduced/elevated temperatures for a specified period of time: 2 weeks in -10°C, 2 weeks in +54°C, 4 weeks in 0°C, 4 weeks in +20°C, 4 weeks in +50°C, 6 weeks in +40°C - test protocol for storage stability (CIPAC MT 39.3 and MT 46.3). Physical evaluation results: the degree of separation, sedimentation and colour are shown in table 16. The same tests were performed for a wettable powder MFA + fungicide (table 17).

**Table 16. Physical properties of MFA solo liquid formulation and fungicidal active ingredients + MFA suspension concentrate**

| **Product** | **Appearance** | | | | | | |
|---|---|---|---|---|---|---|---|
| | **Initial** | **2 weeks, -10°C** | **2 weeks, +54°C** | **4 weeks, 0°C** | **4 weeks, +20°C** | **4 weeks, +50°C** | **6 weeks, +40°C** |
| MFA1 Solo | Dark brown homogeneous liquid of medium viscosity and flowable | Dark brown homogeneous liquid of medium viscosity and flowable | Dark brown homogeneous liquid of medium viscosity and flowable | Dark brown homogeneous liquid of medium viscosity and flowable | Dark brown homogeneous liquid of medium viscosity and flowable | Dark brown homogeneous liquid of medium viscosity and flowable | Dark brown homogeneous liquid of medium viscosity and flowable |
| MFA1.1 Solo | Grey/brown homogeneous liquid of medium viscosity and flowable | Rapid settling of solid particles to give a sticky sediment | Rapid settling of solid particles to give a sticky sediment | Rapid settling of solid particles to give a sticky sediment | Rapid settling of solid particles to give a sticky sediment | Rapid settling of solid particles to give a sticky sediment | Rapid settling of solid particles to give a sticky sediment |
| MFA1.2 Solo | Brown homogeneous liquid of medium viscosity and flowable | Rapid settling of solid particles to give a sticky sediment | Rapid settling of solid particles to give a sticky sediment | Rapid settling of solid particles to give a sticky sediment | Rapid settling of solid particles to give a sticky sediment | Rapid settling of solid particles to give a sticky sediment | Rapid settling of solid particles to give a sticky sediment |
| MFA2 Solo | Grey/brown homogeneous liquid of medium viscosity and flowable | Rapid settling of solid particles to give a sticky sediment | Rapid settling of solid particles to give a sticky sediment | Rapid settling of solid particles to give a sticky sediment | Rapid settling of solid particles to give a sticky sediment | Rapid settling of solid particles to give a sticky sediment | Rapid settling of solid particles to give a sticky sediment |
| MFA3 Solo | Dark brown homogeneous liquid of medium viscosity and flowable | Dark brown homogeneous liquid of medium viscosity and flowable | Dark brown homogeneous liquid of medium viscosity and flowable | Dark brown homogeneous liquid of medium viscosity and flowable | Dark brown homogeneous liquid of medium viscosity and flowable | Dark brown homogeneous liquid of medium viscosity and flowable | Dark brown homogeneous liquid of medium viscosity and flowable |
| MFA4 Solo | Grey homogeneous liquid of medium viscosity and flowable | Rapid settling of solid particles to give a sticky sediment | Rapid settling of solid particles to give a sticky sediment | Rapid settling of solid particles to give a sticky sediment | Rapid settling of solid particles to give a sticky sediment | Rapid settling of solid particles to give a sticky sediment | Rapid settling of solid particles to give a sticky sediment |
| Fludioxinil + MFA 1.1 | Grey/brown homogeneous liquid of medium viscosity and flowable | Sample frozen, reverted to liquid on thawing. Light grey/brown appearance | Light grey/brown formulation. Trace separation. Medium viscosity and flowable. No evidence of sediment | Light grey/brown formulation with evidence of separation throughout the formulation. Medium viscosity and flowable. 2 inversions to become fully homogenous. No evidence of sediment | Light grey/brown formulation with evidence of separation throughout the formulation. Medium viscosity and flowable. 2 inversions to become fully homogenous. No evidence of sediment | Light grey/brown formulation with evidence of separation throughout the formulation. Medium viscosity and flowable. 4 inversions to become fully homogenous. No evidence of sediment | 10% separation with cloudy brown supernatant on surface. Light grey/brown formulation, 3 inversions to become fully homogeneous. Medium viscosity and flowable. No evidence of sediment |
| Azoxystrobin + MFA1.1 | Light grey/brown homogeneous liquid of medium viscosity and flowable | Sample frozen, reverted to light grey/brown homogenous liquid on thawing | Light grey/brown formulation. Sample gelled during storage, required agitation to become flowable. No evidence of sediment | Light grey/brown homogeneous formulation of medium viscosity and flowable. No evidence of sediment | Light grey/brown homogeneous formulation of medium viscosity and flowable. No evidence of sediment | Light grey/brown formulation with trace separation. Sample gelled during storage, required agitation to become fully homogeneous. No evidence of sediment | 10% separation with cloudy brown supernatant on surface. Light grey/brown formulation, 4 inversions required to become fully homogeneous. Medium viscosity and flowable. No evidence of sediment |

| **Initial** | **2 weeks -10°C** | **2 weeks +54°C** | **4 weeks 0°C** | **4 week +20°C** | **4 week +50°C** | **6week +40°C** | |
|---|---|---|---|---|---|---|---|
| Fluopicolide + MFA1 | Dark brown homogeneous liquid of medium viscosity and flowable | Sample frozen, reverted to dark brown homogenous liquid on thawing | 10% separation with cloudy brown supernatant. Dark brown formulation, 4 inversions to become fully homogeneous. Medium viscosity | Dark brown homogeneous liquid of medium viscosity and flowable. No evidence of sediment | Dark brown homogeneous liquid of medium viscosity and flowable. No evidence of sediment | 11% separation with cloudy brown supernatant on surface. Dark brown formulation, 6 inversions to become fully homogeneous. No evidence of crystals or packing down | 13% separation with cloudy brown supernatant on surface. Dark brown formulation, 5 inversions to become fully homogeneous. Medium viscosity and flowable. No evidence of sediment |
| Pyraclostrobin + Boscalid + MFA 1.1 | Light grey/brown homogeneous liquid of medium viscosity and flowable | Sample frozen, trace separation on surface. Reverted to light grey/brown liquid on thawing | 20% separation with dark brown supernatant on surface. Light grey/brown formulation, 10 inversions to become fully homogeneous | Light grey/brown formulation with trace separation on surface. Increased viscosity upon removal. Required agitation to become fully homogeneous. No evidence of sediment | Light grey/brown formulation with trace separation on surface. Increased viscosity upon removal. Required agitation to become fully homogeneous. No evidence of sediment | 14% separation with clear brown supernatant on surface. Light grey/brown formulation, sample gelled during storage. Required agitation to become homogeneous. No evidence of sediment | 13% separation with dark brown supernatant on surface. Light grey/brown formulation required agitation to become fully homogeneous. Medium viscosity and flowable. No evidence of sediment |

All SC formulations tested had acceptable appearance and physical properties, both initially and after storage. None of the formulations had a sediment on storage and, where surface separation was observed, it was possible to rehomogenise the samples with no more than ten inversions. All these formulations were readily pourable initially and after storage/thawing at -10°C and 0°C. Some formulations became more viscous when stored above ambient temperature and some gelled at or above 50°C storage. These refluidised with gentle agitation on cooling to ambient temperature. None of the acceptable formulations gelled at 40°C.

The formulations with the optimal rheological properties on storage (i.e. minimal changes in viscosity and yield) were those containing MFA1.1. Kelzan APAS has been selected as thickener because it is known to be electrolyte tolerant and both MFA contain soluble ionic components. No crystallisation occurred in any of the SC formulations on cold storage, another important feature of a good suspension concentrate product.

**Table 17. Physical properties of fungicides together with MFA wettable powder formulations**

| **Product** | **Appearance** | | | | | | |
|---|---|---|---|---|---|---|---|
| | **Initial** | **2 weeks, -10°C** | **2 weeks +54°C** | **4 weeks 0°C** | **4 weeks +20°C** | **4 weeks +50°C** | **6 weeks +40°C** |
| Prothioconazole + MFA1.1 | Off white free flowing powder | Off white free flowing powder | Off white powder, clumpy upon removal. Becomes free flowing upon agitation | Off white powder, clumpy upon removal. Becomes free flowing upon agitation | Off white powder, clumpy upon removal. Becomes free flowing upon agitation | Off white powder, clumpy upon removal. Becomes free flowing upon agitation | Off white powder, clumpy upon removal. Becomes free flowing upon agitation |
| Fluopyram + MFA1.1 | Off white free flowing powder | Off white free flowing powder | Off white powder, clumpy upon removal. Becomes free flowing upon agitation | Off white powder, clumpy upon removal. Becomes free flowing upon agitation | Off white powder, clumpy upon removal. Becomes free flowing upon agitation | Off white powder, clumpy upon removal. Becomes free flowing upon agitation | Off white powder, clumpy upon removal. Becomes free flowing upon agitation |

The wettable powder formulations were prepared, and physical and chemical properties were tested showing acceptable parameters both at the initial phase and after accelerated thermal aging (test protocol for storage stability performed according CIPAC MT 39.3 and MT 46.3).

### Results of the microbiological tests

The efficacy of the embodiments of the present inventions were tested on following pathogens: **Fungi:** *Alternaria spp.* (Alternaria leaf spot) e.g. *A. solani, A. alternata, A. obovoidea*/*alternata, A. rosae*/*infectoria; Blumeria* (formerly Erysiphe) *graminis* (powdery mildew); *Botrytis cinerea; Cercospora spp.* e.g. *C. beticola, C. sojina, C. kikuchii; Cladosporium spp.* e.g. *C. fulvum, C. herbarum, C. allicinum, C. tenuissimum; Colletotrichum* (teleomorph: *Glomerella*) *spp.* (an thracnose) e.g. *C. coccodese, C. lindemuthianum, C. truncatum, C. gloeosporioides, C. fragariae; Drechslera syn. Helminthosporium,* teleomorph: *Pyrenophora) spp.* e.g. *D. teres* (net blotch), *D. tritici* - repentis; *Epicoccum spp.* black mould; *Erysiphe spp.* (powdery mildew) e.g. *E. betae, E. pisi, E. cichoracearum, E. cruciferarum; Eutypa lata* (Eutypa canker or dieback); *Fusarium* (teleomorph: *Gib berella* ) *spp.* e.g. *F. graminearum* or *F. culmorum, F. oxysporum, F. solani, F. acuminatum, F. equiseti, F. poae, F. proliferatum, F. petersiae, F. sporotrichioides*; *Microdochium* (syn. *Fusarium) nivale* (pink snow mould) e.g. *Microsphaera diffusa* (powdery mildew); *Monilinia spp.* e.g. *M. laxa, M. fructicola, M. fructigena; Mycosphaerella spp.* e.g. *M. graminicola* (anamorph: *Septoria tritici, Septoria blotch), M. fijiensis* (black Sigatoka disease); *Oculimacula yallundae; Penicillium spp.* e.g. *P. aurantiogriseum, P. chrysogenum*/*crustosum, P. freii, P. glabrum; Peronospora spp.* (downy mildew) e.g. *P. brassicae, P. para sitica, P. tabacina, P. manshurica; Phakopsora pachyrhizi, P. meibomiae* (soybean rust); *Phoma lingam* (root and stem rot) e.g. *P. betae; Phomopsis spp, P. viticola,* (stem phaseoli, teleomorph: *Diaporthe phaseolorum*)*, Phytophthora spp.* (wilt, root, leaf, fruit and stem root) e.g. *P. capsici, P. megasperma, P. infestans, P. cactorum; Plasmopara spp.,* e.g. *P. viticola; Podosphaera spp.* (powdery mildew); *Puccinia spp.* (rusts) e.g. *P. triticina, P. striiformis, P. hordei, P. graminis* or *P. recondite, P. kuehnii; Pyrenophora anamorph: Drechslera tritici* - repentis (tan spot), *P. teres: Pyricularia spp.,* e.g. *P. oryzae* (teleomorph: *Magnaporthe grisea,* rice blast); *Pythium spp.* (damping - off ) e.g. *P. ultimum or P. aphanidermatum; Ramularia spp.,* e.g. *R. collocygni, R. beticola; Rhizoctonia spp. e.g. R. solani, R. solani, R. cerealis; Rhizopus stolonifer; Rhynchosporium secalis; Sclerotinia spp.* stem rot or white mould) e.g. *S*. *sclerotiorum, S*. *rolfsii; Septoria spp.* e.g. *S*. *glycines, S*. *tritici, S*. *nodorum; Uncinula* (syn. *Erysiphe) necator* (powdery mildew, anamorph: *Oidium tucker*); *Trichoderma harzianum; Trichoderma spp.; Uromyces spp.* (rust) e.g. *U. appendiculatus, U. betae; Ustilago spp.* (loose smut) e.g. *U. nuda, U. avaenae, U. maydis; Venturia spp.* e.g. *V. inaequalis; Verticillium spp.* (wilt) e.g. *V. dahlia, V .longisporium; Venturia inaequalis.*

Gram positive bacteria such as *Bacillus subtillis, Corynebacterium spp., Mycobacterium phylei, Streptomyces scabies, Clavibacter michiganensis,* as well as gram negative bacteria, e.g. *Citrobacter freundii, Erwinia amylovora, Erwinia catotovora, Escherichia coli, Morganella morganii, Pseudomonas fluorescens, Pseudomonas putida, Pseudomonas syryngiae, Serratia marcescens, Xantomonas spp., Pectobacterium spp., Ralstonia solanacea, Dickeya spp.*

The microbiological tests were carried out by applying Kirby-Bauer Disk Diffusion Susceptibility Test Protocol for antimicrobial activity. It is based on the formation of a concentration gradient in the growth medium during the diffusion of the active substance from the antibiogram disc (Kirby-Bauer method).

The performance of the embodiments of the present inventions and their mixtures enriched with millbase (MFA) was analysed against the appropriate reference substance, i.e., a commercial product containing the analogue active substance with the same concentration. The prepared solutions were applied on the paper antibiograms. Then the soaked antibiograms were placed on the Petri Dishes (dish diameter 90 mm) with the growth medium for fungal pathogens V8. Composition of V8: agar, calcium carbonate and multi-vegetable juice. 3 fragments of mycelium of the tested pathogen (5 × 5 mm) were transplanted onto the prepared medium. As a result, the zones where the fungal growth was inhibited have been measured and compared respectively with the control sample and the analogue active substance sample.

Additionally, the performance of the embodiments of the present inventions and their mixtures enriched with millbase (MFA) was analysed against the bacterial pathogens. The prepared solutions and the analogue active substance with the same concentration were applied on the paper antibiograms. Then the soaked antibiograms were placed on the Petri Dishes (dish diameter 90 mm) with the growth medium for bacterial pathogens Nutrient Agar (NA), where bacterial inoculation was previously made. Composition of NA media: agar, peptone, beef extract and NaCl. The bacterial pathogens were streaked on growth media by the cell spreader. As a result, inhibition zones (halo effect) were measured and compared respectively with the control sample as well as selected active substance samples.

Assessment was carried out by determining the infested area of the Petri dish in %. These percentages have been converted into efficacy (W) according to Abbot's formula as follows: W = (1- α/β) × 100
where:
α - corresponds to the mycelium/bacterial growth of each tested sample [%],
β - corresponds to the mycelium/bacterial growth in control sample [%].

In order to estimate if the combined action effect with the commercial fungicide, the W parameter of the mixture was compared with W parameter for particular commercial fungicide solo. Where W = 0 the efficacy of the control sample (whole Petri dish covered with mycelium), and W = 100 is when no mycelium growth observed.

The tests of the addition of various fungicidal active ingredients together with MFA formulations were carried out in laboratory conditions. They are source of knowledge about possible interactions between individual active ingredients and MFA and its impact on the tested fungi. In the case of combining MFA with a fungicidal active ingredient that completely controls the selected pathogen, when used alone, the presence or absence of a negative interaction between the products used can be assessed. Other significant factors are: the time of possible interactions between the components of the mixture and the environment in which the components of the mixture come into contact with the pathogens.

A use of combined spraying formulation for improving plant physiology properties is characterised by at least one of the effects: better growth, a better development of shoot and root system, increased photosynthetic efficiency, greener leaf area, improved water use efficiency of the crops, improved nitrogen-use efficiency and increased harvest yields.

### Azoxystrobin

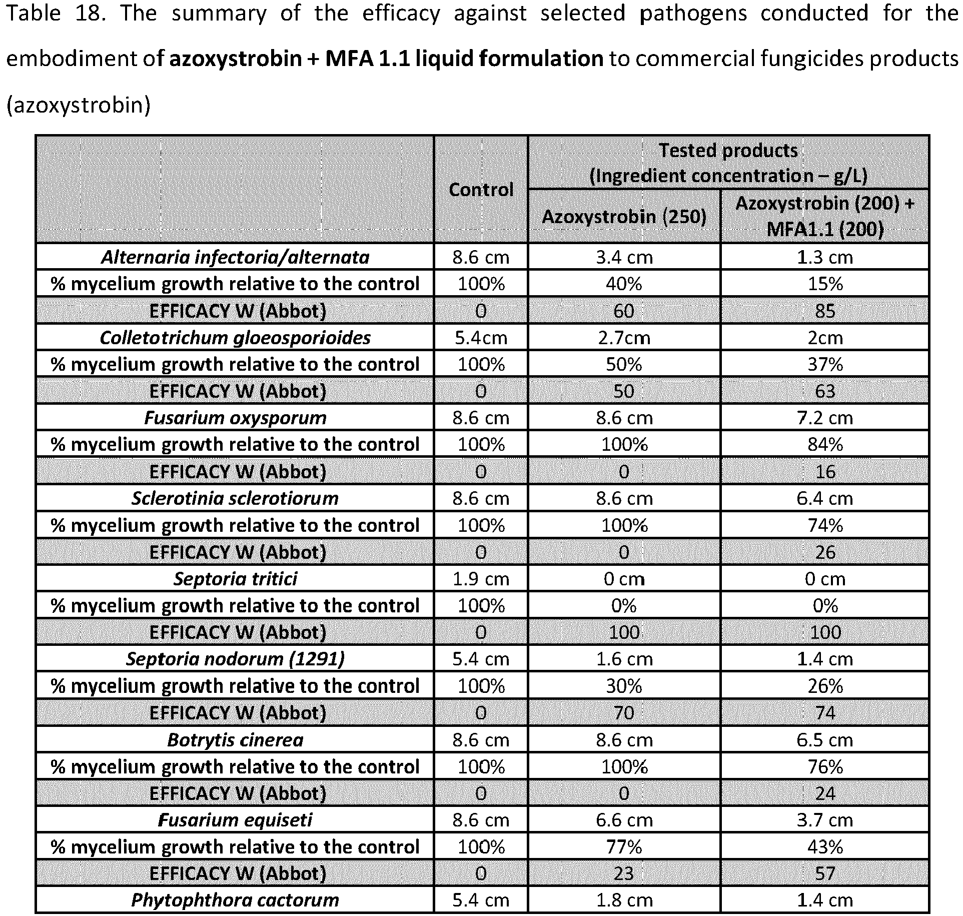

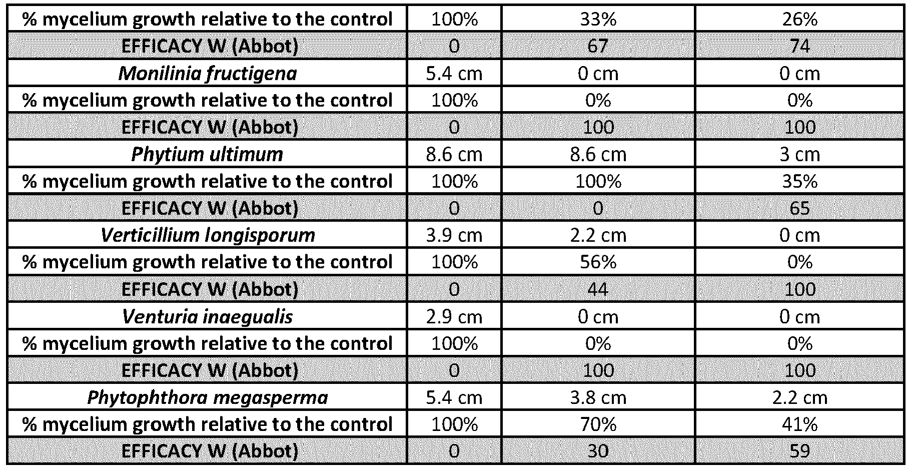

The combined use of MFA1.1 with the active ingredient **azoxystrobin** changed the effectiveness of reducing pathogen development by 7 to + 65%, most often in the range of + 13 to + 29%. These results indicate the sensitivity of the individual fungi to the compounds contained MFA1.1 in the presence of the fungicide ingredients used decreased.

### Fludioxonil

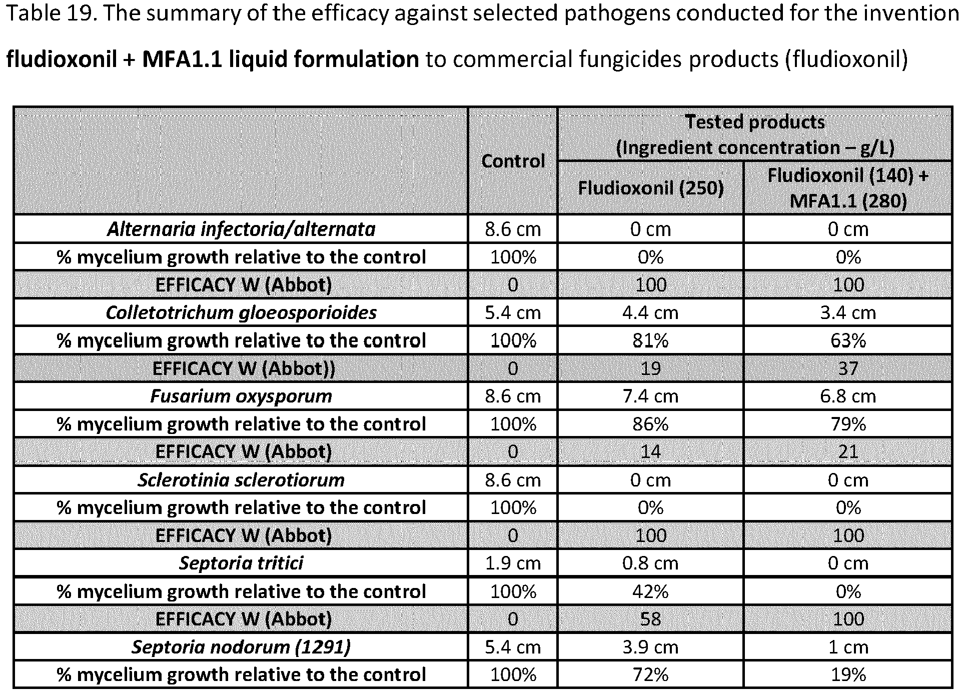

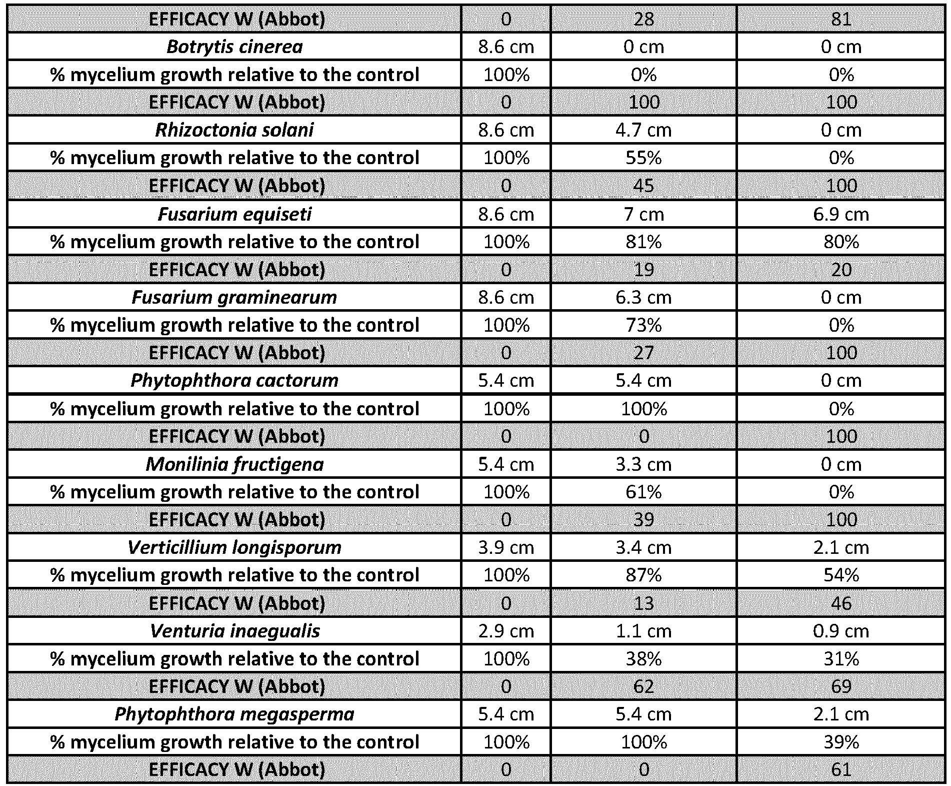

The combined use of MFA1.1 with the active substance **fludioxonil** increased the effectiveness in reducing the development of pathogens by 7 to + 100%, most often in the range of +33 to + 73%. These results indicate the sensitivity of the individual pathogens to the compounds contained in MFA1.1 in the presence of the active substances of the fungicides. In three cases, where fludioxonil completely inhibited fungal growth, MFA1.1 did not show any deterioration in efficacy while active ingredient dose was decreased.

### Pyraclostrobin + Boscalid

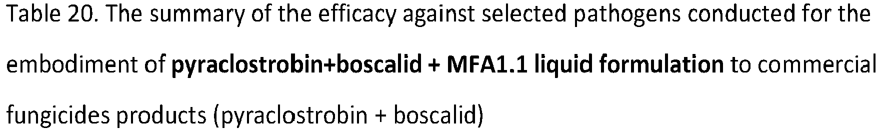

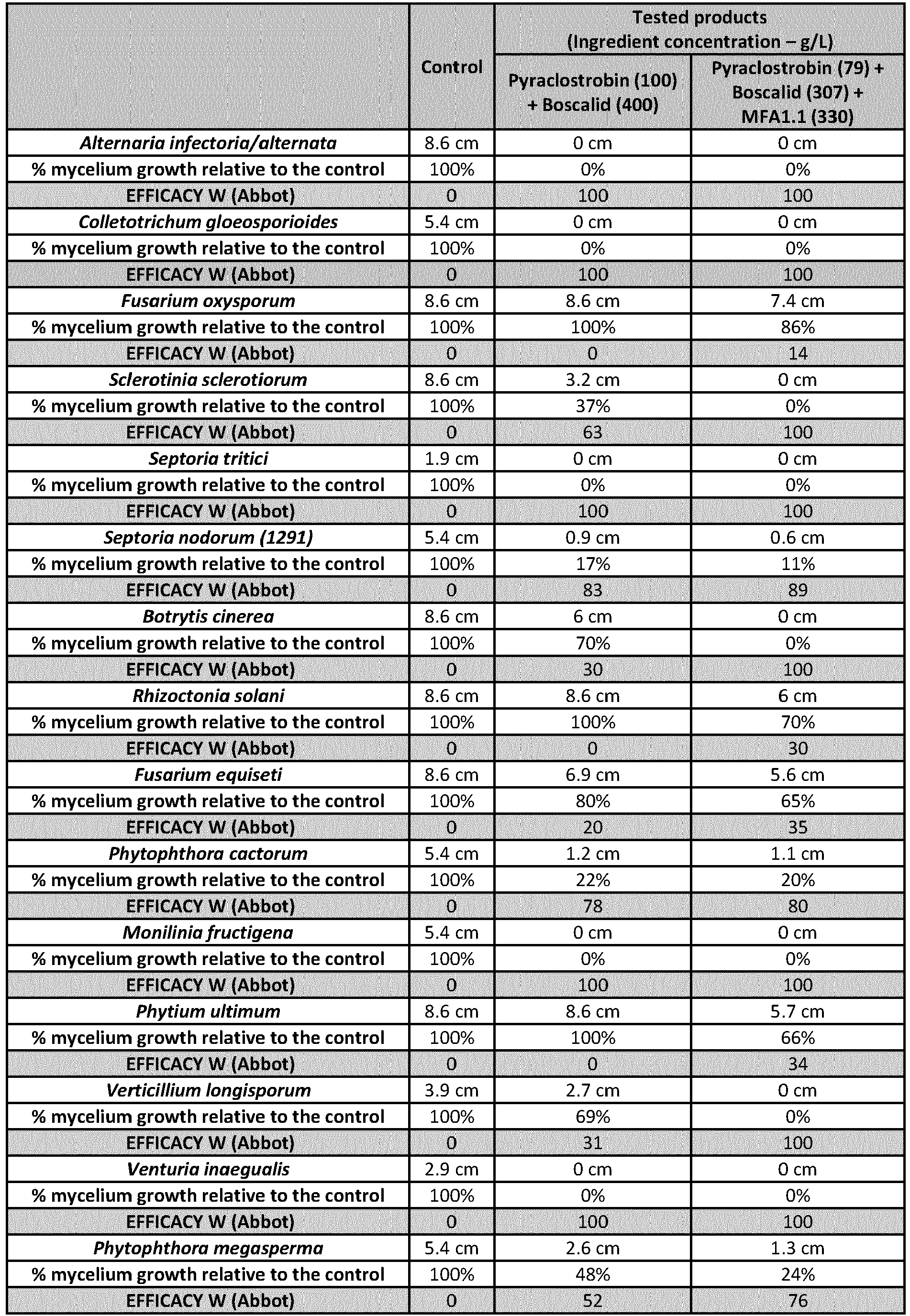

The combined use of MFA1.1 with the active substances pyraclostrobin and boscalid changed the effectiveness of reducing pathogen development from 5 to + 70%, most often in the range of +13 to + 47%. These results seem to indicate the sensitivity of individual fungi to the compounds contained in MFA1.1 in the presence of the active substances pyraclostrobin and boscalid. In the case of five pathogens, where pyraclostrobin and boscalid completely inhibited the growth of fungi, MFA1.1 did not show any deterioration of efficacy while active ingredient dose was decreased.

### Fluopicolide

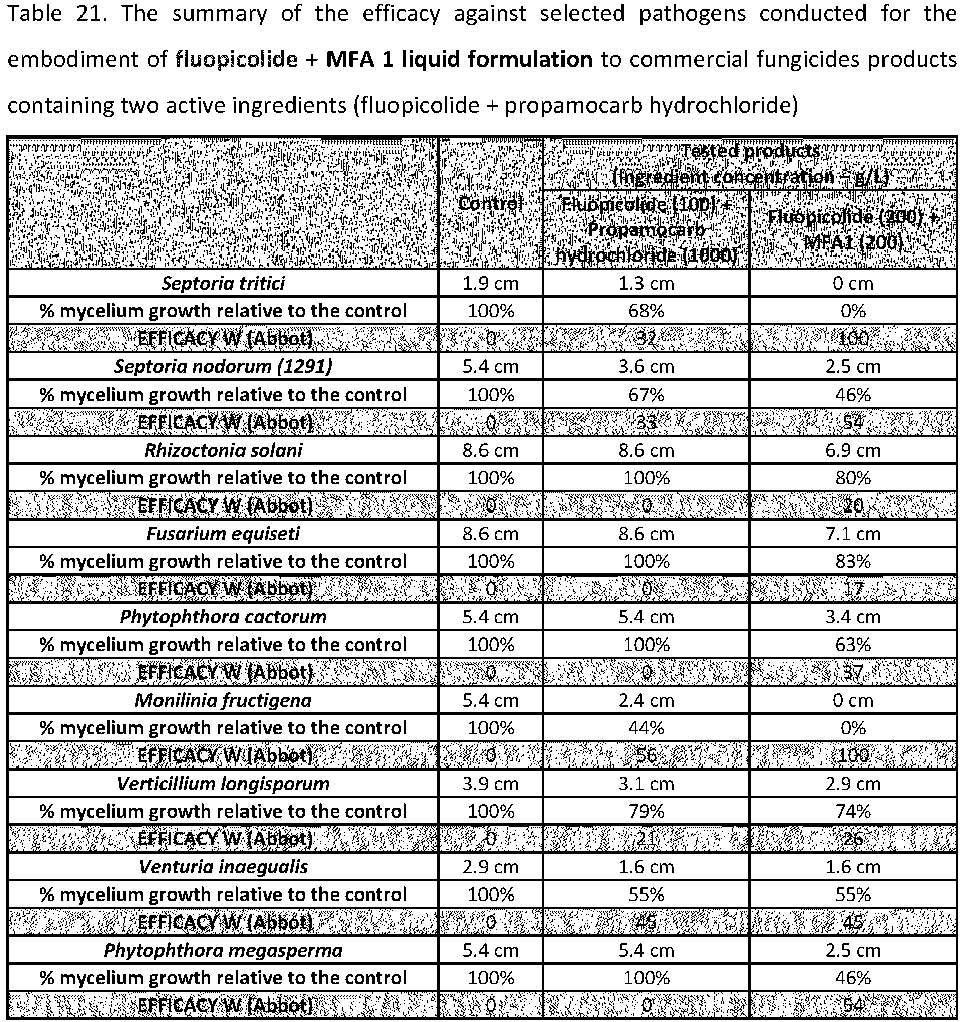

The combined use of MFA1 with the active substance **fluopicolide** changed the pathogen control efficacy by + 5 to + 68%. These results seem to indicate a different sensitivity of individual fungi to the compounds contained in MFA1.1 in the presence of the active ingredient of the fungicide while active ingredient dose was decreased by 50%.

### Prothioconazole

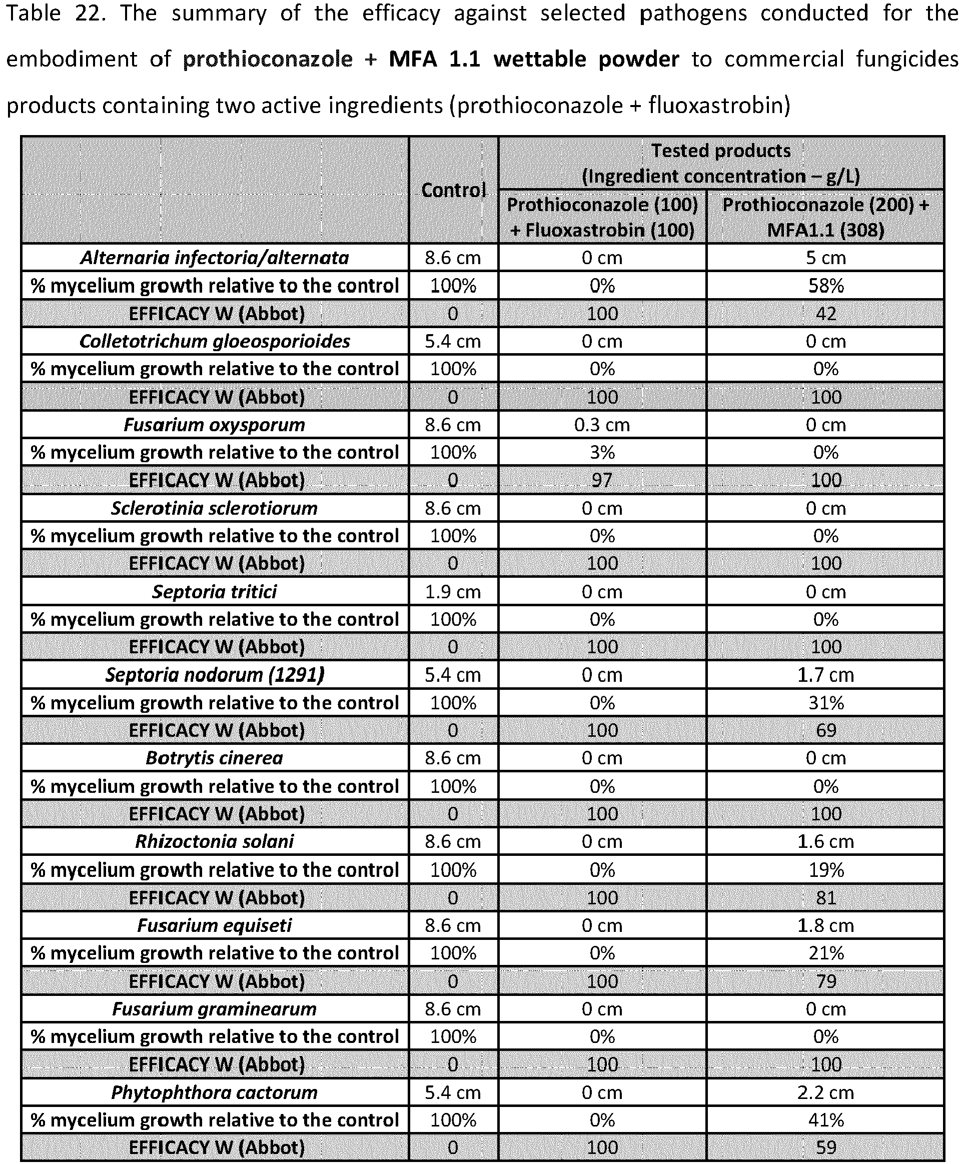

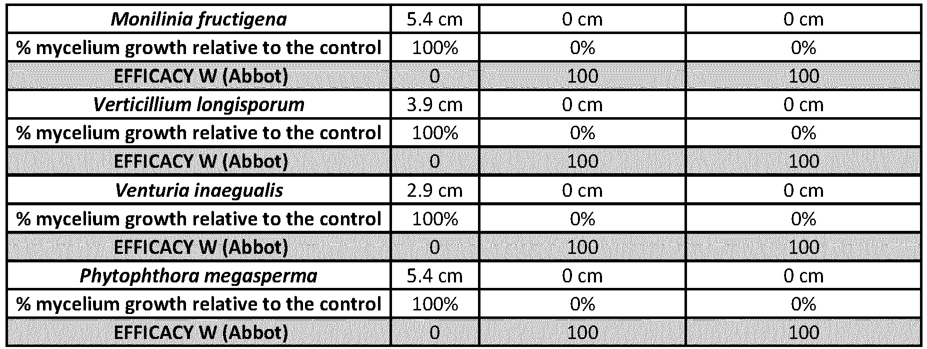

Commercial fungicide products contained two active ingredients (prothioconazole + fluoxastrobin). The combined use of MFA1 with just one active ingredient - prothioconazole - still proved high efficacy in reducing pathogens development. In five cases, efficacy was lower than the standard full dose, however still proving high efficacy against pathogens with reduced dose of active ingredient.

### Fluopyram

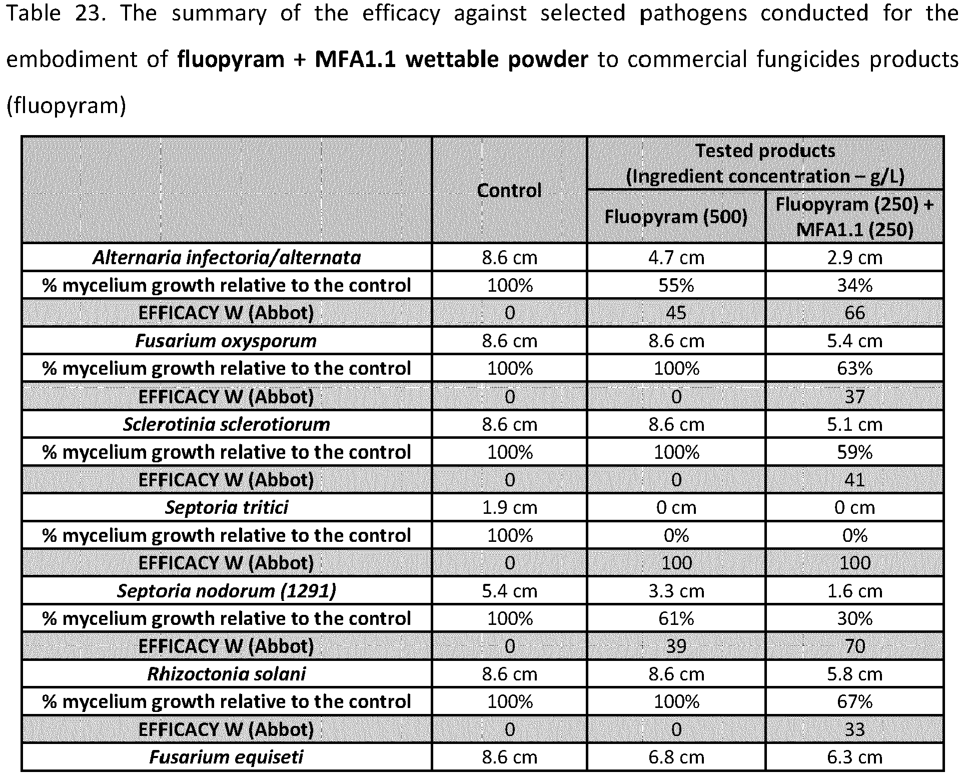

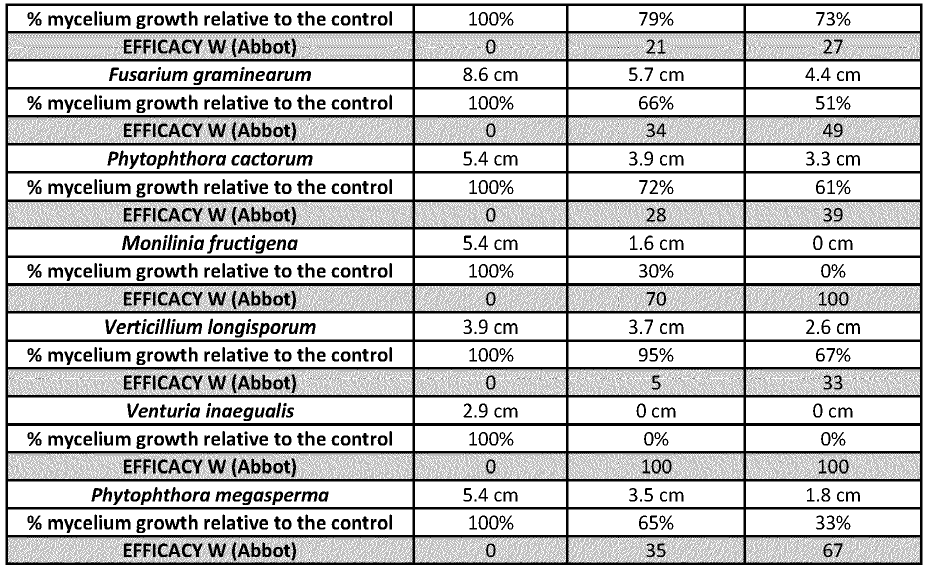

The combined use of MFA1.1 with the active substance fluopyram changed the effectiveness in reducing the development of pathogens by 6 to + 33%, most often in the range of +15 to +33%. These results seem to indicate the sensitivity of the individual fungi to the compounds contained in MFA1.1 in the presence of the active ingredient.

### Thiabendazole

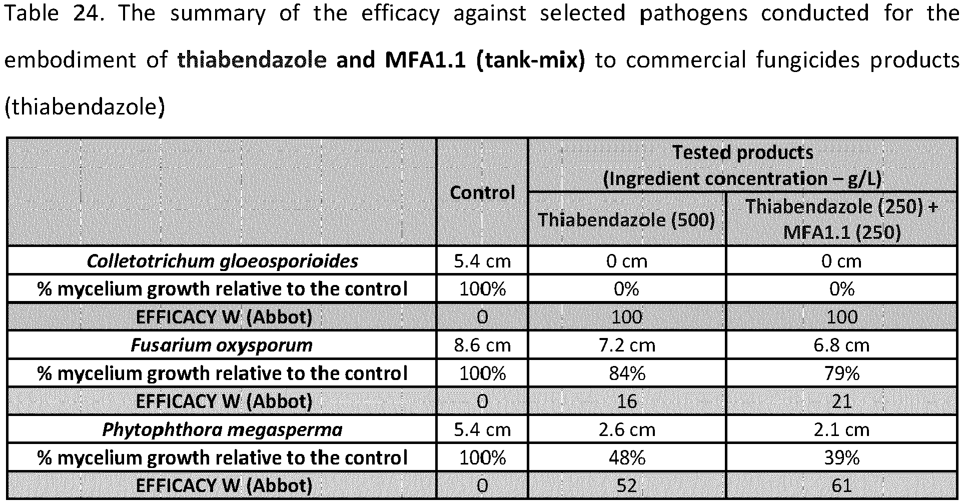

The combined use of MFA1.1 with the active substance thiabendazole changed the effectiveness in reducing the development of pathogens by 5 to +9%. These results indicate the sensitivity of the individual fungi to the compounds contained in MFA1.1 in the presence of the active ingredients reduced.

### Cyazofamid

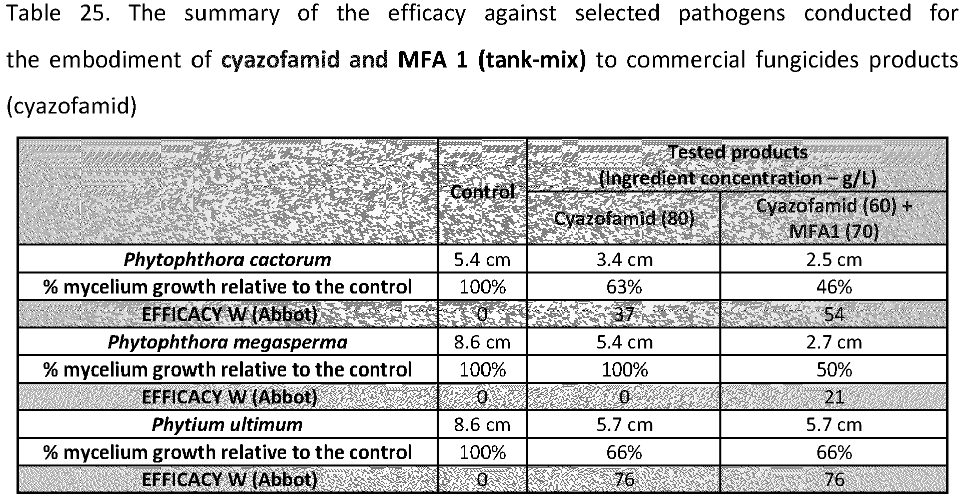

The combined use of MFA1 with the active substance cyazofamid changed the effectiveness in reducing the development of pathogens by 7 to +21%. These results indicate the sensitivity of the individual fungi to the compounds contained in MFA1 in the presence of the active ingredients reduced.

### Fluazinam

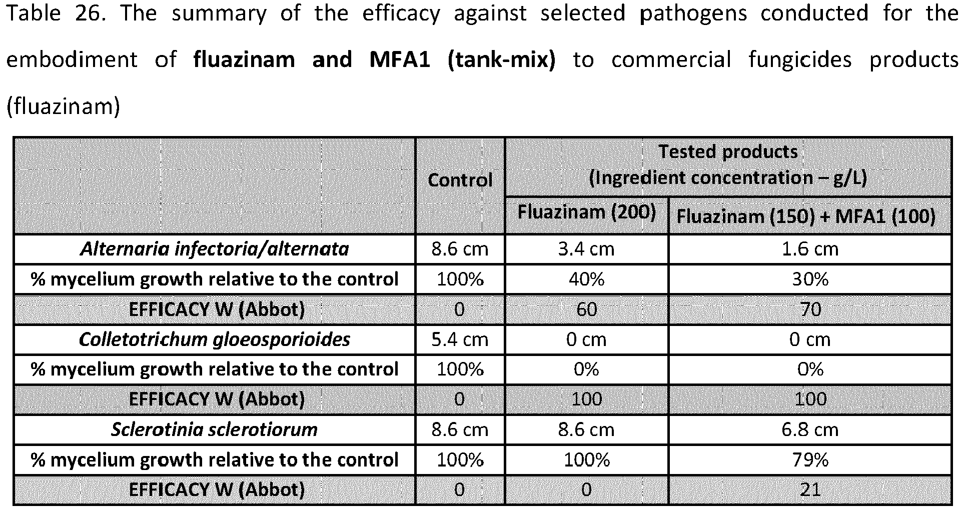

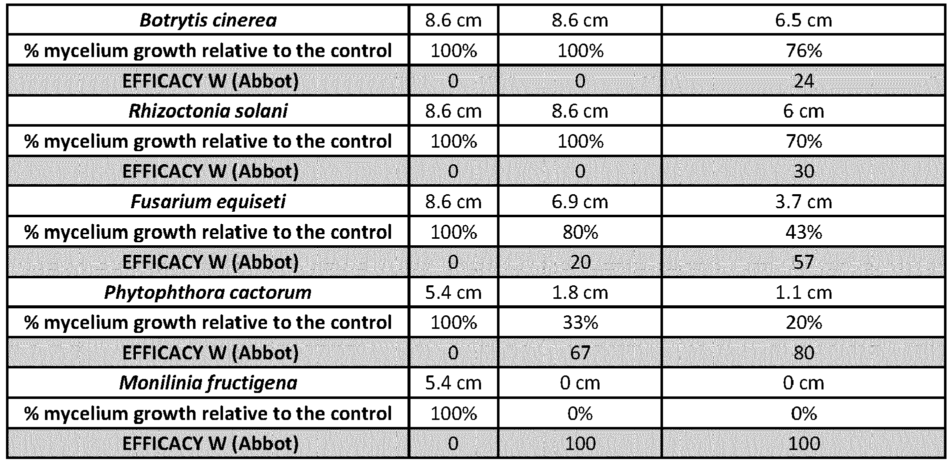

The combined use of MFA1 with the active substance fluazinam changed the effectiveness in reducing the development of pathogens by 10 to +30%. These results indicate the sensitivity of the individual fungi to the compounds contained in MFA1 in the presence of the active ingredients reduced.

### Captan

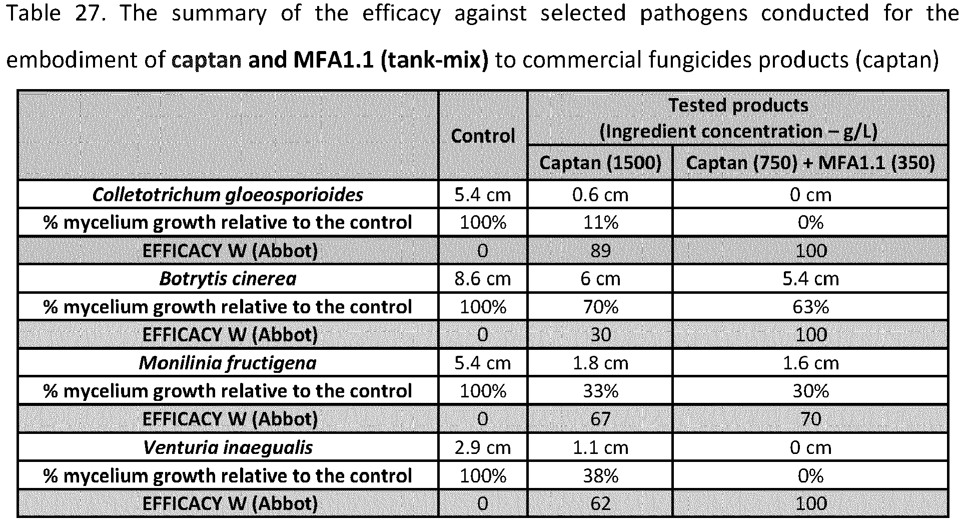

The combined use of MFA1.1 with the active substance fluazinam changed the effectiveness in reducing the development of pathogens by 3 to +70%. These results indicate the sensitivity of the individual fungi to the compounds contained in MFA1.1 in the presence of the active ingredients reduced.

### Dodine

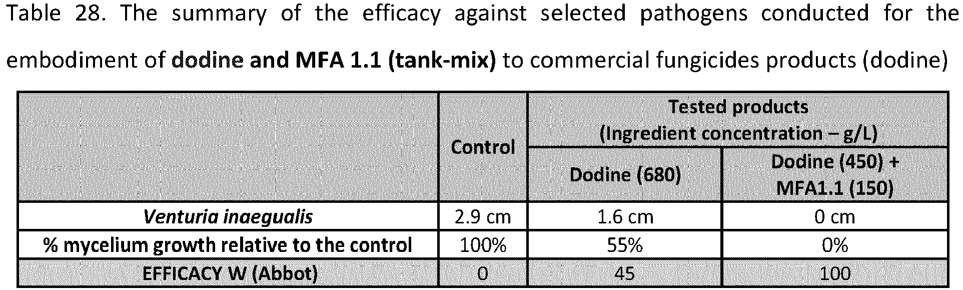

The combined use of MFA1.1 with the active substance dodine changed the effectiveness in reducing the development of pathogens significantly.

### Metrafenone

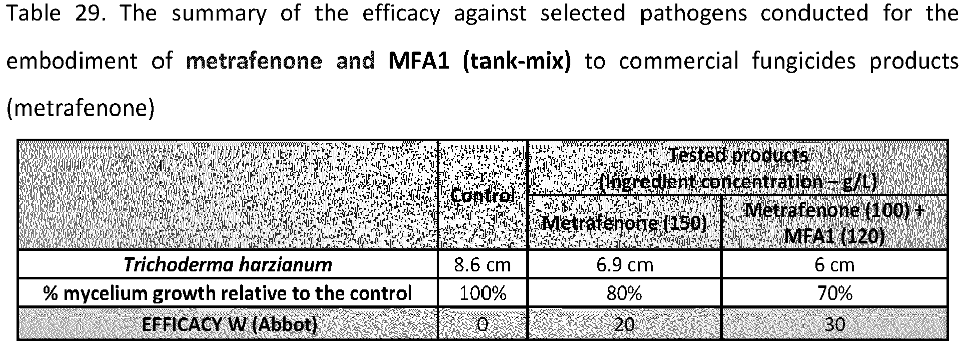

The combined use of MFA1 with the active substance metrafenone improved effectiveness in reducing the development of pathogens.

### Bacterial pathogens

**Table 30. The summary of the efficacy against Erwinia sp. conducted for the embodiment of MFA1.1 and commercial fungicides products (tank-mixes)**

| **Tested products (Ingredient concentration - g/L)** | ***Erwinia sp*. bacterial growth [mm]** | **Efficacy %** |
|---|---|---|
| Control (no treatment) | 3.5 | 0.00 |
| Azoxystrobin (250) | 2.7 | 22.86 |
| Azoxystrobin (125) + MFA1.1 (125) | 2.5 | 22.86 |
| Fludioksonil (250) + Cyprodynil (375) | 3.5 | 0.00 |
| Fludioksonil (125) + Cyprodynil (187) + MFA1.1 (312) | 2.5 | 28.57 |
| Prochloraz (450) | 3.5 | 0.00 |
| Prochloraz (225) + MFA1.1 (225) | 2.8 | 20.00 |
| Bacillus subtillis (10⁸ CFU/ml) | 2.7 | 22.86 |
| Bacillus subtillis (10⁸ CFU/ml) + MFA1.1 (25) | 2.5 | 28.57 |
| Fludioksonil (25) + Sedaxan (25) | 2.5 | 28.57 |
| Fludioksonil (12.5) + Sedaxan (12.5) + MFA1.1(25) | 2.5 | 28.57 |
| Bromuconazole (167) + Tebuconazole (107) | 2.8 | 20.00 |
| Bromuconazole (84) + Tebuconazole (54) + MFA1.1 (140) | 2.6 | 25.71 |

### Example 4 FIELD TRIALS - TANK-MIX

The formulation according to the embodiments sums up its action well with the commercially used spectrum of commercial crop protection products including fungicides, wherein the formulation may comprise at least one active ingredient and co-formulants or it may comprise only one active ingredient or at least two active ingredients or a combination thereof. The vast majority of their uses is intended for the initial stages of pathogen infection, which justifies their combined uses with a product supporting plant immune processes. Limiting the development of pathogens combined with supporting the action of anti-fungal substances and increasing the plant's stimulations processes and its own resistance is an innovative, unprecedented process of using micronutrient fertilizers.

The use of the embodiments of the products disclosed herein in a combined spraying (tank-mix) is the preferred version of its applications, not excluding, of course, the use of solo, without mixing with other products. In some experiments, the effect of improving plant health without the use of fungicides was observed, which only proves the mobilization of plant resistance, and not the effect of fungicide action of the product.

As defined herein, the term crops refers to plants that are commercially cultivated for food or goods production such as wheat, barley, oats, rye, triticale, rice, maize, sorghum and millet, oilseed rape (canola), sunflower, sugar beets, soybean, peanuts, tobacco, apple, pear, peaches, cherries, plums, apricots, nectarines and almonds, lemons, limes, oranges, grapefruit, mandarin, artichoke, sugar beet, carrot, cassava, ginger, horseradish, potato, radish, garlic, leek, onion, celery, cress, parsley, radicchio, rhubarb, spinach, broccoli, broccoli raab, Brussels sprouts, cabbage, bok choy, cauliflower, collards, kale, mustard greens, bean eggplant, pepin, pepper, tomatillo, tomato, citron, melon, cucumber, watermelon, berries (including blueberry, cranberry, currant, elderberry, gooseberry, raspberry and strawberry), almond, nut, bananas, plantains, mangos, coconuts, papaya, guava, avocado, lichee, agave, coffee, cacao, sugar cane, oil palm, sesame, rubber and spices, cotton and hemp, but not limited to it. Plant protection product including fungicides with composition according to the inventions might be applied for a foliar spray, for seeds coating of many plants and pre-harvest treatments and protection against storage diseases.

### Field trials results: commercial fungicides containing active ingredients + MFA (tank mix) vs commercial fungicides containing one or more active substance

The rates of application (use) of the composition of the present invention (MFA) vary according to type of use, type of crop, the specific active ingredient in the combination, but is such that the active ingredient in the combination is an effective amount to provide the desired action (such as disease control). The application rate of the composition for a given set of conditions can readily be determined by trials.

Field trials were conducted in Poland according to approved EPPO guidelines: PP 1/135(4), PP 1/152(4), PP 1/181(4) (general), PP 1/1(4) (sugar beet), PP 1/28(3), PP 1/26 (4) (winter wheat), PP 1/78(4) (oilseed), PP1/263(1), PP1/16(3) (strawberry), PP 1/2(5), PP 1/263(1) (potato). The spray volumes were in line with farmers' practice, varying between 200-300 I/ha. The applications were processed as per the EPPO guideline specific for each crop.

### Oilseed rape

**Table 31. Efficacy against Sclerotinia sclerotiorum and Phoma lingam, together with yield quality parameters, under field conditions compared to azoxystrobin efficacy and control variant with no treatment applied**

| **Tested commercial fungicides + MFA (Ingredient concetration - g/L)** | **Efficacy *Sclerotinia sclerotiorum* [scale 0-10]** | **Efficacy *Phoma lingam* [scale 0-10]** | **Biomass [dt/ha]** | **Yield [dt/ha]** | **Bulk density [kg/dm³]** | **The Thousand Grain Weight (TGW) [g]** |
|---|---|---|---|---|---|---|
| Control (no treatment) | 6.28 | 4.18 | 90.00 | 25.49 | 0.65 | 5.64 |
| Azoxystrobin (250) | 4.32 | 3.42 | 112.50 | 25.54 | 0.65 | 5.34 |
| Azoxystrobin (125) + MFA1 (125) | 3.74 | 2.54 | 120.00 | 29.22 | 0.66 | 5.74 |
| Azoxystrobin (125) + MFA2 (125) | 3.62 | 2.53 | 130.00 | 30.98 | 0.70 | 5.33 |
| Azoxystrobin (125) + MFA3 (125) | 3.33 | 2.43 | 105.00 | 26.35 | 0.70 | 5.48 |

The use of MFA1, MFA2 and MFA3 as an additive (tank mix partner) to azoxystrobin resulted in an increase in the efficacy against the assessed pathogens, an increase in plant biomass and an increase yield quality and quantity parameters.

**Table 32. Efficacy against Sclerotinia sclerotiorum and Phoma lingam, together with yield quality parameters, under field conditions compared to metconazole efficacy and control variant with no treatment applied**

| **Tested commercial fungicides + MFA (Ingrediente concentration - g/L)** | **Efficacy *Sclerotinia sclerotiorum* [scale 0-10]** | **Efficacy *Phoma lingam* [scale 0-10]** | **Biomass [dt/ha]** | **Yield [dt/ha]** | **Bulk density [kg/dm³]** | **The Thousand Weight (TGW) [g]** |
|---|---|---|---|---|---|---|
| Control (no treatment) | 6.28 | 4.18 | 90.00 | 25.49 | 0.65 | 5.64 |
| Metconazole (90) | 4.11 | 2.99 | 152.50 | 33.63 | 0.67 | 6.13 |
| Metconazole (45) + MFA1.2 (45) | 3.70 | 2.92 | 137.50 | 25.48 | 0.64 | 6.15 |
| Metconazole (45) + MFA2 (45) | 3.43 | 2.23 | 127.50 | 29.70 | 0.64 | 5.95 |

The use of MFA1.2 and MFA2 as an additive (tank mix partner) to metconazole resulted in similar efficacy against the assessed pathogens, in plants biomass and an increase yield quality and quantity parameters vs control samples.

**Table 33. Efficacy against Sclerotinia sclerotiorum and Phoma lingam, together with yield quality parameters, under field conditions compared to prochloraz efficacy and control variant with no treatment applied**

| **Tested commercial fungicides + MFA (Ingrediente concentration - g/L)** | **Efficacy *Sclerotinia sclerotiorum* [scale 0-10]** | **Efficacy *Phoma lingam* [scale 0-10]** | **Biomass [dt/ha]** | **Yield [dt/ha]** | **Bulk density [kg/dm³]** | **The Thousand Weight (TGW) [g]** |
|---|---|---|---|---|---|---|
| Control (no treatment) | 6.28 | 4.18 | 90.00 | 25.49 | 0.65 | 5.64 |
| Prochloraz (450) | 4.17 | 3.11 | 125.00 | 30.06 | 0.68 | 5.72 |
| Prochloraz (225) + MFA1.1 (225) | 3.27 | 3.21 | 130.00 | 25.48 | 0.58 | 5.48 |
| Prochloraz (225) + MFA2 (225) | 3.81 | 2.71 | 115.00 | 31.30 | 0.74 | 5.29 |
| Prochloraz (225) + MFA4 (225) | 4.05 | 2.95 | 127.50 | 30.64 | 0.70 | 5.43 |

The use of MFA1.1, MFA2 and MFA4 as an additive (tank mix partner) to prochloraz resulted in an increase in the efficacy of against *S*. *sclerotiorum* and *P. lingam,* supporting significant biomass and yield increase.

### Winter wheat

**Table 34. Efficacy against Zymoseptoria tritici together with yield quality parameters, under field conditions compared to azoxystrobin efficacy and control variant with no treatment applied**

| **Tested commercial fungicides + MFA (Ingrediente concentration - g/L)** | **Efficacy *Zymoseptoria tritici* [scale 0-10]** | **Biomass [dt/ha]** | **Yield [dt/ha]** | **Bulk density [kg/dm³]** | **The Thousand Weight (TGW) [g]** |
|---|---|---|---|---|---|
| Control (no treatment) | 4.68 | 157.50 | 76.50 | 0.67 | 41.90 |
| Azoxystrobin (250) | 4.32 | 147.50 | 66.33 | 0.63 | 43.60 |
| Azoxystrobin (125) + MFA1 (125) | 3.34 | 145.00 | 73.79 | 0.67 | 46.20 |
| Azoxystrobin (125) + MFA2 (125) | 3.62 | 177.50 | 78.30 | 0.69 | 49.00 |
| Azoxystrobin (125) + MFA3 (125) | 3.30 | 157.50 | 73.06 | 0.67 | 46.70 |

The use of MFA1, MFA2 and MFA3 as an additive (tank mix partner) to azoxystrobin resulted in an increase in the efficacy against *Zymoseptoria tritici* clear supporting the biomass of plants and yield parameters specifically the TGW.

**Table 35. Efficacy against Zymoseptoria tritici together with yield quality parameters, under field conditions compared to metconazole efficacy and control variant with no treatment applied**

| | | | | | |
|---|---|---|---|---|---|
| **Tested commercial fungicides + MFA (Ingrediente concentration - g/L)** | **Efficacy *Zymoseptoria tritici* [scale 0-10]** | **Biomass [dt/ha]** | **Yield [dt/ha]** | **Bulk density [kg/dm³]** | **The Thousand Weight (TGW) [g]** |

| Control (no treatment) | 4.68 | 157.50 | 76.50 | 0.67 | 41.90 |
|---|---|---|---|---|---|
| Metconazole (90) | 3.11 | 172.50 | 78.95 | 0.67 | 46.20 |
| Metconazole (45) + MFA1.2 (45) | 3.08 | 162.50 | 74.01 | 0.70 | 47.80 |
| Metconazole (45) + MFA2 (45) | 3.43 | 187.50 | 82.73 | 0.70 | 47.30 |

The use of MFA1.1, MFA2 as an additive (tank mix partner) to metconazole resulted in an increase in the efficacy against *Zymoseptoria tritici* (MFA1.2) and increase of plant biomass and yield quantity and quality parameters (MFA2).

**Table 36. Efficacy against Zymoseptoria tritici together with yield quality parameters, under field conditions compared to prochloraz efficacy and control variant with no treatment applied**

| **Tested commercial fungicides + MFA (Ingrediente concentration - g/L)** | **Efficacy *Zymoseptoria tritici* [scale 0-10]** | **Biomass [dt/ha]** | **Yield [dt/ha]** | **Bulk density [kg/dm³]** | **The Thousand Weight (TGW) [g]** |
|---|---|---|---|---|---|
| Control (no treatment) | 4.68 | 157.50 | 76.50 | 0.67 | 41.90 |
| Prochloraz (450) | 3.37 | 157.50 | 71.51 | 0.65 | 46.90 |
| Prochloraz (225) + MFA1.1 (225) | 3.17 | 182.50 | 84.85 | 0.66 | 49.30 |
| Prochloraz (225) + MFA2 (225) | 2.90 | 172.50 | 79.02 | 0.66 | 45.90 |
| Prochloraz (225) + MFA4 (225) | 3.05 | 170.00 | 76.20 | 0.68 | 48.40 |

The use of MFA1.1, MFA2 and MFA4 as an additive (tank mix partner) to prochloraz resulted in an increase in the efficacy against *tritici,* increased significant plant biomass and yield parameters.

### Soya

**Table 37. Efficacy against Peronospora manshurica and Colletotrichum spp. together with yield quality parameters, under field conditions compared to azoxystrobin efficacy and control variant with no treatment applied**

| **Tested commercial fungicides + MFA (Ingredient concentration - g/L)** | **Efficacy *Peronospora manshurica* [scale 0-10]** | **Efficacy *Colletotrichum spp*. [scale 0-10]** | **Biomass [dt/ha]** | **Yield [dt/ha]** | **Bulk density [kg/dm³]** | **The Thousand Weight (TGW) [g]** |
|---|---|---|---|---|---|---|
| Control(no treatment) | 5.66 | 4.21 | 190.0 | 37.41 | 0.728 | 205.3 |
| Azoxystrobin (250) | 3.32 | 1.76 | 156.7 | 38.26 | 0.627 | 204.0 |
| Azoxystrobin (125) + MFA1 (125) | 2.34 | 1.32 | 140.0 | 33.74 | 0.725 | 207.9 |
| Azoxystrobin (125) + MFA2 (125) | 3.32 | 1.11 | 136.7 | 40.63 | 0.739 | 196.6 |
| Azoxystrobin (125) + MFA3 (125) | 3.31 | 1.32 | 130.0 | 32.07 | 0.721 | 204.1 |

The use of MFA1, MFA2 and MFA3 as an additive (tank mix partner) to azoxystrobin resulted in an increase in the efficacy against *Colletotrichum spp.* (each MFA), *P. manshurica* (MFA1) supporting yield improvement (MFA3).

**Table 38. Efficacy against Peronospora manshurica and Colletotrichum spp. together with yield quality parameters, under field conditions compared to metconazole efficacy and control variant with no treatment applied**

| **Tested commercial fungicides + MFA (Ingredient concentration - g/L)** | **Efficacy *Peronospora manshurica* [scale 0-10]** | **Efficacy *Colletotrichum spp*. [scale 0-10]** | **Biomass [dt/ha]** | **Yield [dt/ha]** | **Bulk density [kg/dm³]** | **The Thousand Weight (TGW) [g]** |
|---|---|---|---|---|---|---|
| Control (no treatment) | 5.66 | 4.21 | 190.0 | 37.41 | 0.728 | 205.3 |
| Metconazole (90) | 3.13 | 2.31 | 146.7 | 32.86 | 0.724 | 207.0 |
| Metconazole (45) + MFA1.2 (45) | 2.71 | 1.74 | 156.7 | 41.75 | 0.730 | 210.8 |
| Metconazole (45) + MFA2 (45) | 2.44 | 1.33 | 133.3 | 31.07 | 0.678 | 215.4 |

The use of MFA1.2, MFA2 as an additive (tank mix partner) to metconazole resulted in an increase in the efficacy against *Colletotrichum spp.* and *P. manshurica* supporting yield improvement.

**Table 39. Efficacy against Peronospora manshurica and Colletotrichum spp. together with yield quality parameters, under field conditions compared to prochloraz efficacy and control variant with no treatment applied**

| **Tested commercial fungicides + MFA (Ingredient concentration - g/L)** | **Efficacy *Peronospora manshurica* [scale 0-10]** | **Efficacy *Colletotrichum spp*. [scale 0-10]** | **Biomass [dt/ha]** | **Yield [dt/ha]** | **Bulk density [kg/dm³]** | **The Thousand Weight (TGW) [g]** |
|---|---|---|---|---|---|---|
| Control (no treatment) | 5.66 | 4.21 | 190.0 | 37.41 | 0.728 | 205.3 |
| Prochloraz (450) | 3.37 | 2.79 | 176.7 | 41.37 | 0.743 | 211.5 |
| Prochloraz (225) + MFA1.1 (225) | 3.07 | 2.38 | 180.0 | 41.38 | 0.742 | 208.3 |
| Prochloraz (225) + MFA2 (225) | 2.98 | 2.22 | 176.7 | 39.03 | 0.691 | 216.9 |
| Prochloraz (225) + MFA4 (225) | 3.08 | 2.19 | 153.3 | 37.52 | 0.736 | 216.4 |

The use of MFA1.1, MFA2 and MFA4 as an additive (tank mix partner) to prochloraz resulted in an increase in the efficacy against assessed pathogens, plant biomass and yield (MFA 2 and MFA4).

### Field trials results: commercial fungicides + MFA (tank mix) vs fungicides commercially available

### Sugar beet

**Table 40. Efficacy against Cercospora beticola, together with yield quality parameters, under field conditions**

| **Tested commercial fungicides +MFA (Ingredient concentration - g/L)** | **Efficacy *Cercospora beticola* [%]** | **Yield [t/ha]** | **Sugar content [%]** |
|---|---|---|---|
| Control (no treatment) | 0 | 64.00 | 20.40 |
| Full dose fungicides | 93.90 | 72.30 | 20.29 |
| 1/2 dose fungicides | 88.30 | 71.10 | 20.21 |
| MFA1.1 (200) | 79.70 | 70.00 | 21.07 |
| MFA1.1 (400) | 84.80 | 71.50 | 20.95 |
| Full dose fungicides + MFA1.1 (200) | 95.10 | 74.30 | 20.44 |
| Full dose fungicides + MFA1.1 (400) | 95.00 | 74.90 | 20.66 |
| 1/2 dose fungicides + MFA1.1 (200) | 89.70 | 74.00 | 20.95 |
| 1/2 dose fungicides + MFA1.1 (400) | 89.90 | 74.00 | 20.50 |

The use of product MFA1.1 alone in both dose rates showed lowest efficacy, but highest sugar content in roots. Full dose of standard fungicides with both dose rates of MFA1.1 was most effective against *Cercospora* with highest roots yield and sugar content better than control. However full dose of standard fungicides resulted in sugar content lower than control.

**Table 41. The list of commercial fungicides containing active substances applied as the fungicide programme**

| **Application time** | **Commercial fungicides (Ingredient concentration - g/L)** | **Full dose [l/ha]** |
|---|---|---|
| T1 | Azoxystrobin (125) + Difenoconazole (125) | 1 |
| T2 | Fenpropidin (375) + Difenoconazole (100) | 1 |
| T3 | Fenpropidin (375) + Difenoconazole (100) | 1 |

### Oilseed rape

**Table 42. Efficacy against Sclerotinia sclerotiorum together with yield quality parameters, under field conditions**

| **Tested commercial fungicides + MFA (Ingredient concentration - g/L)** | **Efficacy *Sclerotinia sclerotiorum* [%]** | **Yield [t/ha]** | **The Thousand Grain Weight (TGW) [g]** |
|---|---|---|---|
| Control (no treatment) | 0 | 2.96 | 4.72 |
| Full dose fungicides | 91.08 | 3.54 | 5.11 |
| 1/2 dose fungicides | 85.81 | 3.43 | 5.14 |
| MFA1.1 (200) | 56.13 | 3.18 | 5.10 |
| MFA1.1 (400) | 64.67 | 3.25 | 5.09 |
| Full dose fungicides + MFA1.1 (200) | 93.22 | 3.53 | 5.20 |
| Full dose fungicides + MFA1.1 (400) | 94.44 | 3.54 | 5.12 |
| 1/2 dose fungicides + MFA1.1 (200) | 83.37 | 3.43 | 5.19 |
| 1/2 dose fungicides + MFA1.1 (400) | 87.71 | 3.46 | 5.23 |

The use of product MFA1.1 in both dose rates with full dose rate of standard fungicides showed the highest efficacy. The seeds yield was highest and very similar in all variants with full dose rates of standard fungicides. MFA1.1 alone in both dose rates limited presence of *Sclerotinia* improving yield as well.

**Table 43. The list of commercial fungicides containing active substances applied as the fungicide programme**

| **Application time** | **Commercial fungicides (Ingredient concentration - g/L)** | **Full dose [l/ha]** |
|---|---|---|
| T2 | Tebuconazole (160) + Prothioconazole (80) | 1 |
| T3 | Prothioconazole (125) | 1 |

### Winter wheat

**Table 44. Efficacy against tritici and Oculimacula spp., together with yield quality parameters, under field conditions**

| **Tested commercial fungicides + MFA (Ingrediente concentration - g/L)** | **Efficacy against *Zymoseptoria triciti* %** | **Effectiveness against *Oculimacula spp.* %** | **Aboveground biomass of 25 plants [g]** | **The Thousand Grain Weight (TGW) [g]** | **Protein %DM** | **Grain yield [t/ha]** | **Ear-Bearing tillers in 1 m²** |
|---|---|---|---|---|---|---|---|
| Control (no treatment) | 0 | 0 | 158.2 | 41.4 | 10.5 | 7.06 | 516.0 |
| Full dose fungicides | 65 | 58 | 172.1 | 42.7 | 10.5 | 7.89 | 567.8 |
| 1/2 dose fungicides | 60 | 26 | 158.5 | 42.1 | 10.4 | 7.45 | 547.0 |
| MFA 1.1 (200) | 30 | 33 | 167.1 | 41.8 | 10.6 | 7.43 | 541.5 |
| MFA 1.1 (400) | 30 | 35 | 177.6 | 42.4 | 10.6 | 7.18 | 562.0 |
| Full dose fungicides + MFA1.1 (200) | 69 | 50 | 170.9 | 42.4 | 10.7 | 7.74 | 616.8 |
| Full dose fungicides + MFA1.1 (400) | 63 | 58 | 181.0 | 42.6 | 10.9 | 8.09 | 582.5 |
| 1/2 dose fungicides + MFA1.1 (200) | 48 | 43 | 162.5 | 42.3 | 10.2 | 7.5 | 559.3 |
| 1/2 dose fungicides + MFA1.1 (400) | 36 | 49 | 169.7 | 42.4 | 10.4 | 7.53 | 553.8 |

The use of product MFA1.1 in both dose rates with full dose rate of standard fungicides showed the highest efficacy and highest yield. The seeds yield of variants with MFA1.1 alone in both dose rates despite lower efficacy was similar to variants with reduced dose rates of standard fungicides.

**Table 45. The list of commercial fungicides containing active substances applied as the fungicide programme**

| **Application time** | **Commercial fungicides (Ingredient concentration - g/L)** | **Full dose [l/ha]** |
|---|---|---|
| **T1** | Cyprodinil (750) | 1 |
| T2 | Benzovindiflupyr (100) | 0.75 |
| T3 | Prothioconazole (100) + Fluoxastrobin (100) | 1 |

### Strawberry

**Table 46. Efficacy against Botrytis cinerea and Colletotrichum fragariae, together with yield quality parameters, under field conditions**

| **Tested commercial fungicides + MFA (Ingrediente concentration - g/L)** | ***Efficacy Botrytis cinerea* [%]** | **Efficacy *Colletotrichum* [%]** | **Yield [t/ha]** | **Plant vigour [0-10]** | **Leaf colour [1-10]** |
|---|---|---|---|---|---|
| Control (No treatment) | 0 | 0 | 1.2 | 7 | 5 |
| Full dose fungicides | 56.25 | 29.46 | 1.3 | 8 | 8.3 |
| 1/2 dose fungicides | 47.54 | 23.81 | 1.4 | 8 | 7 |
| MFA 1.1. (200) | 67.23 | 33.04 | 1.4 | 9 | 8.5 |
| MFA 1.1. (400) | 69.51 | 31.55 | 1.3 | 10 | 6.8 |
| Full dose fungicides + MFA1.1 (200) | 62.88 | 33.33 | 1.4 | 9 | 5.5 |
| Full dose fungicides + MFA1.1 (400) | 82.27 | 51.79 | 1.5 | 10 | 7.5 |
| 1/2 dose fungicides + MFA1.1 (200) | 86.93 | 48.21 | 1.4 | 9 | 5.5 |
| 1/2 dose fungicides + MFA1.1 (400) | 86.55 | 60.00 | 1.4 | 10 | 8 |

The use of product MFA1.1 against *Botrytis* and *Colletotrichum* in both dose rates showed efficacy similar to full dose of standard fungicides and lower than all variants with mixtures MFA1.1 and standard fungicides. The fruits yield was the highest in variant with full dose rate of fungicides and MFA1.1. All variants with MFA1.1 had the highest plant vigour.

**Table 47. The list of commercial fungicides containing active substances applied as the fungicide programme**

| **Application time** | **Commercial fungicides (Ingredient concentration - g/L)** | **Full dose [l/ha]** |
|---|---|---|
| T1 | Boscalid (267) + Pyraclostrobin (40) | 1.8 |
| T2 | Mepanipirym (440) | 0.7 |
| T3 | Fenheksamid (500) | 1.5 |

### Potatoes

**Table 48. Efficacy against Phytophthora infestans and Alternaria solani, together with yield quality parameters, under field conditions**

| **Tested commercial fungicides + MFA (Ingrediente concentration - g/L)** | **Efficacy *Alternaria solani* [%]** | **Efficacy *Phytophthora infestans* [%]** | **Yield [t/ha]** | **Number of deformed tubers** | **Plant vigour [0-10]** | **Leaf colour [1-10]** |
|---|---|---|---|---|---|---|
| Control (no treatment) | 0 | 0 | 24.1 | 10 | 7 | 3 |
| Full dose fungicides | 82.5 | 85.5 | 25.3 | 6 | 8 | 6 |
| 1/2 dose fungicides | 75.0 | 78.0 | 26.8 | 6 | 8 | 5 |
| MFA1.1 (165) | 80.0 | 78.0 | 27.5 | 6 | 10 | 6 |
| MFA1.1 (300) | 75.0 | 86.5 | 35.5 | 4 | 10 | 7 |
| Full dose fungicides + MFA1.1 (165) | 82.5 | 86.5 | 32.8 | 6 | 9 | 6 |
| Full dose fungicides + MFA1.1 (300) | 82.5 | 88.0 | 35.2 | 4 | 10 | 7 |
| 1/2 dose fungicides + MFA1.1 (165) | 87.5 | 91.5 | 35.8 | 3 | 9 | 6 |
| 1/2 dose fungicides + MFA1.1 (300) | 85.0 | 91.5 | 32.3 | 3 | 10 | 7 |

Efficacy against *Alternaria* and *Phytophtora* when product MFA1.1 alone, in both dose rates showed efficacy similar to full dose and reduced dose of standard fungicides. The highest efficacy showed variants with reduced dose rates of standard fungicides in mixtures MFA1.1 in both dose rates. All variants with MFA1.1 had the highest vigour assessments.

**Table 49. The list of commercial fungicides containing active substances applied as the fungicide programme**

| **Application time** | **Commercial fungicides (Ingredient concentration - g/L)** | **Full dose [l/ha]** |
|---|---|---|
| T1 | Azoxystrobin (250) | 0.5 |
| T2 | Dimethomorph (72) + Pyraclostrobin (40) | 2 |
| T3 | Propamocarb hydrochloride (625) + Fluopicolide (62.5) | 1.5 |
| T4 | Mancozeb (680) + Cymoxanil (45) | 2.3 |
| T5 | Dimethomorph (72) + Pyraclostrobin (40) | 1.5 |
| T6 | Mandipropamid (250) | 0.6 |
| T7 | Oxathiapiprolin (100) | 0.15 |

### Seed treatment

The method of treating seeds according to the embodiment of the present inventions can be characterised in that in the treatment seed with 30 g checked product with and without combination with fungicidal seed treatment products per 100 kg of seed are employed. The results were assessed due to EPPO: PP1/152(4), PP 1/19(5), PP 1/135(4) and PP1/181(4) Standards.

Seed treatment test was conducted according to International Rules for Seed Testing 2018 (ISTA) under laboratory conditions using sterile paper as a growing media. The tests were continued for 14 days. As a result, the germination rate and the number of infected seeds were calculated. The biomass (shoots and roots) was collected and measured accordingly.

### Winter wheat seeds

**Table 50. Efficacy was tested on the winter wheat - seeds treatment test**

| **Tested commercial fungicides + MFA (Ingrediente concentration - g/L)** | **Biomass [g]** | **Average germination percentage [%]** | **% of infections** |
|---|---|---|---|
| Control (no treatment) | 42.68 | 88.50 | 43.30 |
| Fludioxonil (25) + Sedaxan (25) | 42.00 | 95.00 | 19.00 |
| Fludioxonil (25) + MFA1 (50) | 44.00 | 92.00 | 33.00 |
| Zinc chelated by EDTA (13) + MFA1 (20) | 42.24 | 89.00 | 32.00 |
| Zinc chelated by EDTA (13) + MFA1.1 (20) | 41.25 | 88.00 | 35.00 |
| Zinc chelated by EDTA (13) + MFA3 (20) | 40.35 | 88.00 | 36.00 |
| Humic substances (20) + MFA1 (20) | 48.65 | 91.00 | 39.40 |
| Humic substances (20) + MFA1.1 (20) | 48.55 | 89.00 | 40.10 |

### Sugar beet seeds

**Table 51. Efficacy was tested on the sugar beet - seeds treatment test**

| **Tested commercial fungicides + MFA (Ingrediente concentration - g/L)** | **Biomass [g]** | **Average germination percentage [%]** |
|---|---|---|
| Control (no treatment) | 13.29 | 77.40 |
| Fludioxonil (25) + Sedaxan (25) | 8.21 | 63.00 |
| Fludioxonil (25) + MFA1.1 (100) | 12.65 | 75.00 |

### Soybean seeds

**Table 52. Efficacy was tested on the soybean - seeds treatment test**

| **Tested commercial fungicides + MFA (Ingrediente concentration - g/L)** | **Biomass [g]** | **Average germination percentage [%]** | **%of infections** |
|---|---|---|---|
| Control (no treatment) | 63.00 | 80.00 | 82.90 |
| MFA1.1 (100) | 61.00 | 82.90 | 62.90 |
| Fludioxonil (25) + MFA1.1 (100) | 62.95 | 88.60 | 12.90 |

### Barley seeds

**Table 53. Efficacy was tested on the barley - seeds treatment test**

| **Tested commercial fungicides + MFA (Ingrediente concentration - g/L)** | **Biomass [g]** | **Average germination percentage [%]** | **%of infections** |
|---|---|---|---|
| Control (no treatment) | 43.66 | 75.50 | 99.00 |
| MFA1.1 (100) | 43.14 | 75.00 | 98.60 |
| Fludioxonil (25) + MFA1.1 (100) | 46.25 | 82.70 | 80.30 |

### Oat seeds

**Table 54. Efficacy was tested on the oat - seeds treatment test**

| **Tested commercial fungicides + MFA (Ingrediente concentration - g/L)** | **Biomass [g]** | **Average germination percentage [%]** | **% of infections** |
|---|---|---|---|
| Control (no treatment) | 43.01 | 87.00 | 65.00 |
| MFA1.1 (100) | 42.00 | 84.10 | 61.10 |
| Fludioxonil (25) + MFA1.1 (100) | 46.74 | 88.00 | 13.50 |

### Hemp

**Table 55. Efficacy was tested on the hemp - seeds treatment test**

| **Tested commercial fungicides + MFA (Ingrediente concentration - g/L)** | **Biomass [g]** | **Average germination percentage [%]** | **%of infections** |
|---|---|---|---|
| Control (no treatment) | 7.80 | 81.00 | 20.00 |
| MFA1 (20) | 10.43 | 79.00 | 15.00 |
| MFA1.1 (20) | 10.41 | 78.00 | 16.00 |
| MFA3 (20) | 10.61 | 74.00 | 16.00 |
| Zinc chelated by EDTA (13) + MFA1 (20) | 10.50 | 74.00 | 10.00 |
| Zinc chelated by EDTA (13) + MFA1.1 (20) | 10.60 | 76.00 | 9.00 |
| Zinc chelated by EDTA (13) + MFA3 (20) | 11.20 | 77.00 | 14.00 |

The use of MFA1, MFA1.1, MFA3, fertilizer e.g.: zinc chelated by EDTA (ethylenediamine tetraacetic acid), biostimulator e.g.: humic substances (composed of humic acid, fulvic acid and humin) in the seed treatment has neutral to positive influence on germination percentage, biomass increase (shoots and roots) applied alone and in mixtures with seed treatment fungicides. When MFA1, MFA1.1 were applied together with seed treatment fungicides positive influence on reduction of seeds infection percentage was observed. However, no effect was observed when solo MFA1, MFA1.1 were applied.

### Peas seeds

**Table 56. Efficacy was tested on the peas - seeds treatment test**

| **Tested commercial fungicides + MFA (Ingrediente concentration - g/L)** | **Biomass [g]** | **Average germination percentage [%]** | **% of infetions** |
|---|---|---|---|
| Control (no treatment) | 136.14 | 85.00 | 65.00 |
| MFA1.1 (100) | 143.64 | 83.30 | 60.00 |
| Fludioxonil (25) + MFA1.1 (100) | 155.17 | 91.70 | 20.00 |

## Claims

1. A solid form for preparation of an aqueous dispersion, **characterised in that** it comprises (a) a first oxyzinc compound selected from a group comprising: zinc oxide or a first zinc salt of oxygen acid; (b) silver carbonate; and (c) a metal salt selected from a group comprising: an alkali metal carbonate, a second oxyzinc compound or a zinc salt of a halogen hydracid.

2. The solid form according to claim 1, **characterised in that** weight ratio of the first oxyzinc compound:silver carbonate:metal salt is from 19.5% to 80%:0.5% to 4%:16% to 80.0%, preferably weight ratio of first oxyzinc compound:silver carbonate:metal salt is from 20% to 80%:0.5% to 4%:16% to 80.0%.

3. The solid form according to claim 1 or 2, **characterised in that** the first zinc salt of oxygen compound is selected from a group comprising: basic zinc carbonate or zinc metasilicate; and the alkali metal carbonate is sodium carbonate, the second oxyzinc compound is a second zinc salt of oxygen acid, preferably zinc sulphate heptahydrate, and the zinc salt of halogen hydracid is zinc halide.

4. The solid form according to claim 2 or 3, **characterised in that** it comprises zinc oxide, zinc halide and silver carbonate, wherein the form comprises zinc oxide:silver carbonate:zinc halide in weight ratio from 20% to 80%:0.5% to 4%:16% to 40%.

5. The solid form according to any of claims 1 to 4, **characterised in that** it has a form of a powder or granules.

6. An aqueous dispersion, **characterised in that** it comprises the form according to any of claims 1 to 6 in an amount of 10% (w/w) to 45% (w/w) of the aqueous dispersion, preferably from 15% (w/w) to 40% (w/w).

7. The aqueous dispersion according to claim 6 **characterised in that** it comprises additional one or more adjuvants selected from a group comprising: surfactants, protective colloids, adhesives, thickeners, thixotropic agents, penetration agents, stabilisers and/or sequestering agents.

8. A stable suspension concentrate, **characterised in that** it comprises the solid form as defined in any of claims 1 to 6 in an amount of 10% (w/w) to 45% (w/w) of the concentrate in combination with one or more active substances wherein in an amount from 10% to 45% by weight of the concentrate, wherein the active substance is one or more fungicide.

9. The concentrate according to claim 8 **characterised in that** it comprises additional one or more adjuvants selected from a group comprising: surfactants, protective colloids, adhesives, thickeners, thixotropic agents, penetration agents, stabilisers and/or sequestering agents.

10. The concentrate according to claims from 8 to 9, **characterised in that** the one or more fungicides are selected from a group comprising: quinone outside inhibitor, preferably strobilurin fungicide, more preferably methoxyacrylate fungicide or methoxycarbamates fungicide (azoxystrobin, pyraclostrobin), phenylpyrrole fungicide (fludioxonil), demethylation inhibitor fungicide, preferably triazolinthione fungicide (prothioconazole), fluopyram, bixafen, benzamide fungicide, preferably pyridinylmethyl benzamide (fluopicolide), succinate dehydrogenase inhibitor fungicide, preferably pyridine carboxamide fungicide or pyridinylethyl benzamide fungicide or pyrazole-4-carboxamide fungicide (boscalid, fluopyram, bixafen) or methyl benzimidazole carbamate, preferably thiabendazole, quinone inside inhibitor, preferably cyanoimidazole, more preferably cyazofamid, oxidative phosphorylation uncoupling, preferably 2,6-dinitroanilines, more preferably fluazinam, multi-site contact inhibitor, preferably phthalimide fungicide, more preferably captan, guanidine fungicide or aryl-phenyl ketone fungicide, preferably dodine or metrafenone, or a combination thereof.

11. The concentrate according to claims from 8 to 11, **characterised in that** it comprises the solid in a form of a suspension in an amount from 10% to 30% by weight of the concentrate, or in a form of a wettable powder in an amount from 10% to 45% by weight of the concentrate.

12. A combined aqueous dispersion, **characterised in that** it comprises the aqueous dispersion as defined in claim 7 in combination with one or more active substances, wherein a weight ratio of the aqueous dispersion to the at one least active substance or combination of at least two active substances is from 1:0.85 to 6:7, wherein the active substance is fungicide.

13. The combined aqueous dispersion according to claim 12, **characterised in that** the one or more fungicides are selected from a group comprising: quinone outside inhibitor, preferably strobilurin fungicide, more preferably methoxyacrylate fungicide or methoxycarbamates fungicide (azoxystrobin, pyraclostrobin), phenylpyrrole fungicide (fludioxonil), demethylation inhibitor fungicide, preferably triazolinthione fungicide (prothioconazole), fluopyram, bixafen, benzamide fungicide, preferably pyridinylmethyl benzamide (fluopicolide), succinate dehydrogenase inhibitor fungicide, preferably pyridine carboxamide fungicide or pyridinylethyl benzamide fungicide or pyrazole-4-carboxamide fungicide (boscalid, fluopyram, bixafen) or methyl benzimidazole carbamate, preferably thiabendazole, quinone inside inhibitor, preferably cyanoimidazole, more preferably cyazofamid, oxidative phosphorylation uncoupling, preferably 2,6-dinitroanilines, more preferably fluazinam, multi-site contact inhibitor, preferably phthalimide fungicide, more preferably captan, guanidine fungicide or aryl-phenyl ketone fungicide, preferably dodine or metrafenone, or a combination thereof.

14. A use of the dispersion as defined in claim 6 for preparation of a combined spraying formulation, wherein the combined spraying formulation comprises the aqueous dispersion in an amount from 50% (w/w) to 100% (w/w), optionally combined with an active substance in an amount less than 50% (w/w) selected from a group comprising fungicide or bactericide or commercial crop protection product comprising fungicides, wherein preferably fungicide is selected from a group comprising: quinone outside inhibitor, preferably strobilurin fungicide, more preferably methoxyacrylate fungicide, preferably azoxystrobin, demethylation inhibitor fungicide, preferably triazole fungicide or imidazole fungicide, preferably metconazole or prochloraz, or a combination thereof, optionally the combined spraying formulation comprises humic substances (biostimulants and fertilizers) in an amount of 50% (w/w) or zinc-EDTA complex in an amount of 30% (w/w).

15. A use of combined spraying formulation of claim 11 or 12 for improving plant physiology and controlling or treating pathogens of wheat, barley, oilseed rape, potatoes, sugar beet, strawberries, raspberries, apples, soya, hemp or grapes applied on the seed (seed coating), foliar sprays pre-harvest treatments and post-harvest protection against storage diseases.

16. A use of the aqueous dispersion as defined in claim 6 for seed treatment, optionally in combination with an active substance selected from a group comprising: fungicide or bactericide, wherein the weight ratio of the aqueous dispersion to the active substance is from 1:2 to 1:4.
